# EUROPEAN PATENT SPECIFICATION

(11) **EP 1 530 756 B1**
(45) Date of publication and mention of the grant of the patent: **08.09.2010**
(21) Application number: 03763354.2
(22) Date of filing: 03.07.2003
(51) Int. Cl.: G06F 9/44

(54) **WIRELESS DEPLOYMENT / DISTRIBUTED EXECUTION OF GRAPHICAL PROGRAMS TO SMART SENSORS**
DRAHTLOSE VERTEILUNG / VERTEILTE AUSFÜHRUNG VON GRAPHISCHEN PROGRAMMEN ZU INTELLIGENTEN SENSOREN
DEPLOIEMENT SANS FIL/EXECUTION DISTRIBUEE DE PROGRAMMES GRAPHIQUES VERS DES CAPTEURS INTELLIGENTS

(30) Priority: 03.07.2002 US 393528 P; 10.07.2002 US 394895 P; 30.10.2002 US 283602; 30.10.2002 US 283758; 30.10.2002 US 283548
(43) Date of publication of application: 18.05.2005
(60) Divisional application: 08008168.0
(73) Proprietor: National Instruments Corporation, Austin, TX 78759 (US)
(72) Inventor: GHERCIOIU, Marius, Austin, TX 78759 (US); CETERAS, Ciprian, R-4855 Baia Mare (RO); MONOSES, Ioan, R-Cluj Gherla jud. (RO); CRISAN, Gratian, I., R-4666 jud. Cluj. (RO); KODOSKY, Jeffrey, L., Austin, TX 78746 (US)
(74) Representative: Wegner, Hans
(86) International application number: PCT/US2003/021352
(87) International publication number: WO 2004/006205

(56) References cited:
- EP-A- 1 077 404
- WO-A-01/14963
- US-A- 5 838 683
- US-A- 6 102 965
- US-B1- 6 173 438

## Description

### Field of the Invention

The present invention relates to the field of graphical programming, and more particularly to a system and method for enabling wireless transmission of a graphical program to a measurement device, e.g., a sensor or data acquisition device.

### Description of the Related Art

Traditionally, high level text-based programming languages have been used by programmers in writing application programs. Many different high level programming languages exist, including BASIC, C, Java, FORTRAN, Pascal, COBOL, ADA, APL, etc. Programs written in these high level languages are translated to the machine language level by translators known as compilers or interpreters. The high level programming languages in this level, as well as the assembly language level, are referred to herein as text-based programming environments.

Increasingly, computers are required to be used and programmed by those who are not highly trained in computer programming techniques. When traditional text-based programming environments are used, the user's programming skills and ability to interact with the computer system often become a limiting factor in the achievement of optimal utilization of the computer system.

There are numerous subtle complexities which a user must master before he can efficiently program a computer system in a text-based environment. The task of programming a computer system to model or implement a process often is further complicated by the fact that a sequence of mathematical formulas, steps or other procedures customarily used to conceptually model a process often does not closely correspond to the traditional text-based programming techniques used to program a computer system to model such a process. In other words, the requirement that a user program in a text-based programming environment places a level of abstraction between the user's conceptualization of the solution and the implementation of a method that accomplishes this solution in a computer program. Thus, a user often must substantially master different skills in order to both conceptualize a problem or process and then to program a computer to implement a solution to the problem or process. Since a user often is not fully proficient in techniques for programming a computer system in a text-based environment to implement his solution, the efficiency with which the computer system can be utilized often is reduced.

Examples of fields in which computer systems are employed to interact with physical systems are the fields of instrumentation, process control, industrial automation, and simulation. Computer measurement and control of devices such as instruments or industrial automation hardware has become increasingly desirable in view of the increasing complexity and variety of instruments and devices available for use. However, due to the wide variety of possible testing and control situations and environments, and also the wide array of instruments or devices available, it is often necessary for a user to develop a custom program to control a desired system.

As discussed above, computer programs used to control such systems traditionally had to be written in text-based programming languages such as, for example, assembly language, C, FORTRAN, BASIC, etc. Traditional users of these systems, however, often were not highly trained in programming techniques and, in addition, text-based programming languages were not sufficiently intuitive to allow users to use these languages without training. Therefore, implementation of such systems frequently required the involvement of a programmer to write software for control and analysis of instrumentation or industrial automation data. Thus, development and maintenance of the software elements in these systems often proved to be difficult.

U.S. Patent Nos. 4,901,221; 4,914,568; 5,291,587; 5,301,301; and 5,301,336; among others, to Kodosky et al disclose a graphical system and method for modeling a process, i.e., a graphical programming environment which enables a user to easily and intuitively model a process. The graphical programming environment disclosed in Kodosky et al can be considered a higher and more intuitive way in which to interact with a computer. A graphically based programming environment can be represented at a level above text-based high level programming languages such as C, Basic, Java, etc.

The method disclosed in Kodosky et al allows a user to construct a diagram using a block diagram editor. The block diagram may include a plurality of interconnected icons such that the diagram created graphically displays a procedure or method for accomplishing a certain result, such as manipulating one or more input variables and/or producing one or more output variables. In response to the user constructing a diagram or graphical program using the block diagram editor, data structures and/or program instructions may be automatically constructed which characterize an execution procedure that corresponds to the displayed procedure. The graphical program may be compiled or interpreted by a computer.

Therefore, Kodosky et al teaches a graphical programming environment wherein a user places or manipulates icons and interconnects or "wires up" the icons in a block diagram using a block diagram editor to create a graphical "program." A graphical program for performing an instrumentation, measurement or automation function, such as measuring a Unit Under Test (UUT) or device, controlling or modeling instruments, controlling or measuring a system or process, or for modeling or simulating devices, may be referred to as a virtual instrument (VI). Thus, a user can create a computer program solely by using a graphically based programming environment. This graphically based programming environment may be used for creating virtual instrumentation systems, modeling processes, control, simulation, and numerical analysis, as well as for any type of general programming.

A graphical program may have a graphical user interface. For example, in creating a graphical program, a user may create or specify a front panel or user interface panel. The front panel may include various graphical user interface elements or front panel objects, such as user interface controls and/or indicators, that represent or display the respective input and output that will be used by the graphical program or VI, and may include other icons which represent devices being controlled. The front panel may be comprised in a single window of user interface elements, or may comprise a plurality of individual windows each having one or more user interface elements, wherein the individual windows may optionally be tiled together. When the controls and indicators are created in the front panel, corresponding icons or terminals may be automatically created in the block diagram by the block diagram editor. Alternatively, the user can place terminal icons in the block diagram which may cause the display of corresponding front panel objects in the front panel, either at edit time or later at run time. As another example, the front panel may comprise front panel objects, e.g., the GUI, embedded in the block diagram.

During creation of the block diagram portion of the graphical program, the user may select various function nodes or icons that accomplish his desired result and connect the function nodes together. For example, the function nodes may be connected in one or more of a data flow, control flow, and/or execution flow format. The function nodes may also be connected in a "signal flow" format, which is a subset of data flow. The function nodes may be connected between the terminals of the various user interface elements, e. g., between the respective controls and indicators. Thus the user may create or assemble a graphical program, referred to as a block diagram, graphically representing the desired process. The assembled graphical program may be represented in the memory of the computer system as data structures and/or program instructions. The assembled graphical program, e. g. , these data structures or program instructions, may then be compiled or interpreted to produce machine language that accomplishes the desired method or process as shown in the block diagram.

Input data to a graphical program may be received from any of various sources, such as from a device, unit under test, a process being measured or controlled, another computer program, or from a file. Also, a user may input data to a graphical program or virtual instrument using a graphical user interface, e. g. , a front panel as described above. The input data may propagate through the block diagram or graphical program and appear as changes on the output indicators. In an instrumentation application, the front panel can be analogized to the front panel of an instrument. In an industrial automation application the front panel can be analogized to the MMI (Man Machine Interface) of a device. The user may adjust the controls on the front panel to affect the input and view the output on the respective indicators. Alternatively, the user interface may be used merely to view the input and output, or just the output, and the input may not be interactively manipulable by the user during program execution.

Thus, graphical programming has become a powerful tool available to programmers. Graphical programming environments such as the National Instruments LabVIEW product have become very popular. Tools such as LabVIEW have greatly increased the productivity of programmers, and increasing numbers of programmers are using graphical programming environments to develop their software applications. In particular, graphical programming tools are being used for test and measurement, data acquisition, process control, man machine interface(MMI), supervisory control and data acquisition (SCADA) applications, simulation, image processing/machine vision applications, and motion control, among others.

In parallel with the development of the graphical programming model, measurement and control systems have been developed for a wide variety of applications, such as automated manufacturing and remote data collection, among others.

US 6,173,483 B1 is concerned with the deployment of graphical program from a host computer system to an embedded system on which the program is executed. The output data generated by the embedded system are transferred to the host computer system. The embedded system can be a measurement system.

US 6,876,368 B2 is concerned with the deployment of one or more graphical programs to a portable computing device, such as a personal digital assistant device. First, the graphical is converted into an executable; then the executable is transferred to and executed by the portable computing device.

It would be desirable to provide an improved method for distributing and/or deploying graphical programs to various devices.

### Summary of the Invention

One embodiment of the present invention comprises a system and method for distributing, executing, and/or deploying a graphical program to one or more devices in a wireless fashion. First, a graphical program may be created that implements a measurement function, e. g., an industrial automation function, a process control function, and/or a test and measurement function. For example, creating the graphical program may include arranging a plurality of nodes on a display, and interconnecting the plurality of nodes in response to user input. In one embodiment, the graphical program may comprise a graphical data flow program.

At least a portion of a graphical program may be transmitted to a hub device over a network. The hub device may execute the transmitted portion of the graphical program and, in response to said executing, may send one or more commands to a measurement device (e. g. , a sensor) via wireless means in accordance with a wireless communication protocol. The measurement device may then perform the measurement function in response to the one or more commands, and generate resultant data. For example, performing the measurement function may include the measurement device measuring a physical phenomenon to acquire data. Finally, the resultant data may be received from the measurement device via wireless means. In one embodiment, receiving the resultant data from the measurement device via wireless means may include the measurement device sending the resultant data to the hub device via wireless means; and (the computer system or another system) receiving the resultant data from the hub device.

In one embodiment, the graphical program may include a plurality of interconnected nodes that visually indicate functionality of the graphical program. The graphical program may include a block diagram portion and a user interface portion. During execution of the graphical program, the user interface may be displayed on a display of a first computer system and the block diagram may execute on the hub device.

In one embodiment, the hub device may store and execute a graphical program execution engine to execute the transmitted graphical program. In another embodiment, transmitting at least a portion of a graphical program to the hub device may include generating a machine-executable program (e. g. , C code, assembly code, etc. ) based on the graphical program, and transmitting the machine-executable program to the hub device. In this embodiment, the hub device executing the at least a portion of the graphical program may include the hub device executing the machine-executable program. Thus, a machine-executable program representing (at least a portion of) the graphical program may be transmitted to the hub device for execution. The hub device may execute the machine-executable program and send corresponding commands to the measurement device/sensor. The measurement device/sensor may execute the commands (or perform functions based on the commands) and generate the resultant data. The data may then be sent to the hub device, the computer system, and/or an external system, for analysis and/or storage.

In one example which is not part of the present invention, the hub device may send the transmitted portion of the graphical program to the measurement device (e. g. , a sensor) via wireless means in accordance with a wireless communication protocol. The measurement device may then execute the sent portion of the graphical program to perform the measurement function, and generate resultant data. For example, performing the measurement function may include the measurement device measuring a physical phenomenon to acquire data. Finally, the resultant data may be received from the measurement device via wireless means. In one embodiment, receiving the resultant data from the measurement device via wireless means may include the measurement device sending the resultant data to the hub device via wireless means; and (the computer system or another system) receiving the resultant data from the hub device.

In one embodiment, the graphical program may include a plurality of interconnected nodes that visually indicate functionality of the graphical program. The graphical program may include a block diagram portion and a user interface portion. During execution of the graphical program, the user interface may be displayed on a display of a first computer system and the block diagram may execute on the hub device.

In one example which is not part of the present invention, the measurement device may store and execute a graphical program execution engine to execute the transmitted graphical program. In another embodiment, transmitting at least a portion of a graphical program to the measurement device may include generating a machine-executable program (e. g. , C code, assembly code, etc. ) based on the graphical program, and transmitting the machine-executable program to the measurement device. In this example, the measurement device executing the at least a portion of the graphical program may include the measurement device executing the machine-executable program. Thus, a machine-executable program representing (at least a portion of) the graphical program may be transmitted to the measurement device for execution. The measurement device/sensor may execute the machine-executable program (or perform functions based on the machine-executable program) and generate the resultant data. The data may then be sent to the hub device, the computer system, and/or an external system, for analysis and/or storage.

In one embodiment of the invention, the program that is created on the computer system may require use of a program execution engine to execute the program. For example, in one embodiment, the program is a graphical program and requires graphical program execution engine to execute the program. Due to the small footprint of the target device, e. g. , the hub device, in one embodiment, the program execution engine is configured in such a way so as to only transmit the minimum amount of a program execution engine actually required by the program that is being executed. Thus, in one embodiment, the program execution engine is partitioned into a (minimal) base execution engine, and a plurality of components for presenting different functionality that can be performed by a program. The base portion of the program execution engine is only capable of executing the very simplest commands. This minimal engine may comprise the smallest set of commands which allows the other components to be executed.

In one embodiment, when the program is developed by the user, a software program executing on the computer may operate to analyze the program to determine the functionality contained in the program. Once the functionality of the program has been identified, the program uses the functionality to determine which of the respective components of the program execution engine are actually required by the program. In one embodiment, the method determines the functionality of the program, and uses the functionality to index into a data structure or look-up table to determine which program execution engine components will be required to execute this program. When the program is then transmitted or deployed to the hub device, the computer system may operate to only provide the program execution engine base portion and the respective components that are actually required to execute the program. Thus, the smaller amount of execution engine code may be transmitted to the hub device. This allows a smaller footprint for the target device, i. e., the hub and/or the sensor device. In other words, the hub device and/or sensor device may include a smaller processor and/or a smaller memory medium since a full program execution engine is not required to be transmitted.

In one embodiment, after the software program analyzes the program to determine the functionality contained in the program, an execution engine analysis program may determine which execution engine components are required for execution of the program. A deployment program may then assemble the required components of the execution engine and the program, for example, by interspersing the required execution engine components and the program together according to the order of execution of the program. These interspersed program execution engine components and program may then be assembled into a file, and respective portions of the file transmitted to the target device, e. g., the hub device and/or sensor device, for execution.

In one embodiment, successive portions of the file may be streamed to the hub device for dynamic execution. In other words, the target device may execute the program as it is streamed to the device. In an example which is not part of the present invention, the sensor device may receive a first portion of the file comprising a first portion of a program to be executed at a first portion of the execution engine components that are used for executing this first portion of the program. After this first portion of the program has been executed along with the first portion of the execution engine components, the first portion of the program may be flushed or removed from the memory of the sensor device. In a similar manner, the execution engine components that are no longer required may be also removed from the memory. However, execution engine components that may be required by other portions of the program to be executed may be retained in the memory for execution. As discussed above, in one embodiment, the deployment program determines which execution engine components may be required for a plurality of different portions of the program, and includes a variable or data structure or other indication with the execution engine component to indicate that this component should not be flushed immediately after it has been executed, or others should be retained by the hub device and/or sensor device for execution with another part of the program.

After the first portion of each of the program execution components and the program has been executed, the computer system may then provide a second portion of the program interspersed with the second portion of the execution engine components. The second portion of the file may be provided by the computer system to the hub device. Operation then proceeds as above. Thus, for example, the computer system may operate to provide respective portions of the deployment file to the hub device for execution on an as needed basis, based on the memory availability or memory capacity of hub device. The hub device may receive the program that it is supposed to execute along with the execution engine components used by that portion of the program, execute the program under direction of the execution engine components, and then receive further portions of the deployment file, and so forth. Thus, the computer system may essentially provide a stream of the program and its corresponding execution engine components to the hub device according to the order of execution of the program.

In a similar manner which is not part of the present invention, if the program is actually to be executed on the sensor device, the computer system may provide respective portions of this deployment file to the hub device, and the hub device may stream the respective portions of the deployment file to a respective sensor device on an as needed basis, based on the memory capacity of the sensor device.

Thus, various embodiments of the present invention may provide means for performing a measurement function by deploying or executing a graphical program to a measurement device using wireless means.

### Brief Description of the Drawings

A better understanding of the present invention can be obtained when the following detailed description of the preferred embodiment is considered in conjunction with the following drawings, in which:
Figures 1A-1C illustrate various embodiments of a system for performing data acquisition using wireless means;
Figure 2 is a block diagram of the system of Figure 1A, according to one embodiment;
Figure 3 is a block diagram of the computer system of Figures1A-1C, and Figure 2, according to one embodiment;
Figures 4A and 4B are block diagrams of embodiments of the hub device of Figures 1A, 1B, and 2;
Figure 4C is a block diagram of a controller device, according to one embodiment;
Figures 5A and 5B are block diagrams of two embodiments of a wireless DAQ device;
Figure 6 illustrates host and target device software for the systems of Figures 1A, 1B, and 2, according to one embodiment;
Figure 7 illustrates a configuration utility interface, according to one embodiment;
Figure 8 illustrates an extended data acquisition system, according to one embodiment;
Figure 9 illustrates request and reply formats for communications with wireless DAQ devices, according to one embodiment;
Figure 10A illustrates wireless DAQ device software architecture, according to one embodiment;
Figures 10B-10C illustrate a radio communication data packet structure, according to one embodiment;
Figure 11A is a flowchart diagram illustrating one embodiment of a method for executing a graphical program; Figure 11B is a flowchart diagram illustrating one embodiment of a method for executing a graphical program using a wireless DAQ device;
Figures 12A and 12B flowchart embodiments of a method for deploying a graphical program to a wireless DAQ device for execution by the DAQ device;
Figure 13 illustrates a minimal execution system, according to one embodiment;
Figure 14 flowcharts a method for creating the minimal execution system of Figure 13, according to one embodiment;
Figure 15 graphically illustrates componentization of a callback system, according to one embodiment;
Figure 16 flowcharts one embodiment of a method for componentizing a callback system to generate a modular callback system;
Figure 17 illustrates a process of generating a flatfile from a program and the modular callback system, according to one embodiment;
Figure 18 flowcharts one embodiment of a method for generating the program flatfile;
Figures 19A-19C illustrate the structure and deployment of the program flatfile, according to one embodiment; and
Figure 20 flowcharts one embodiment of a method for deploying and executing a program on an embedded device.

While the invention is susceptible to various modifications and alternative forms, specific embodiments thereof are shown by way of example in the drawings and are herein described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### Detailed Description of the Preferred Embodiments

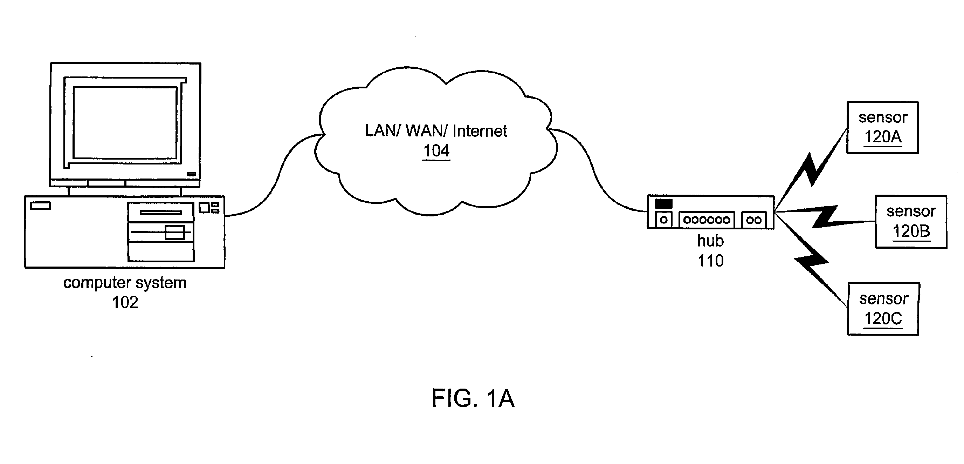

### Figures 1A-1C -Data Acquisition Systems

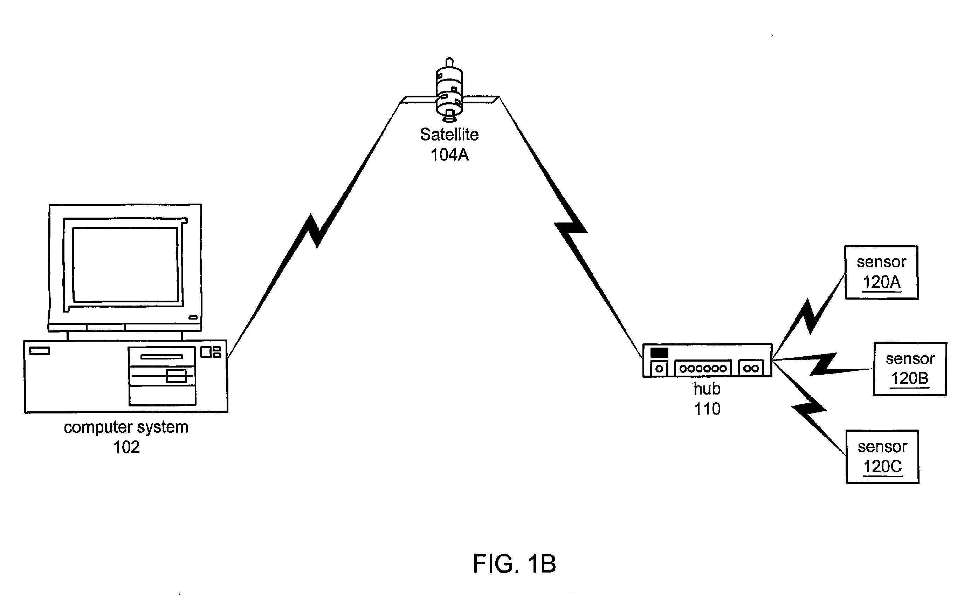

Figures 1A-1C illustrate various embodiments of a system for data acquisition. As shown in Figure 1A, the system may include a computer system 102 coupled through a network 104 to a target device 100, e.g., hub device 110. In Figure 1B, an embodiment is shown where the computer system 102 is coupled to the hub device 110 via wireless means, e.g., via satellite. Other wireless communication means are also contemplated, such as, for example, communication via cell towers, such as used for cellular telephone communication, among others. It should be noted that data acquisition is but one example application of the present invention, and that the techniques described herein are broadly applicable in a variety of domains, such as measurement, and automation and control, among others.

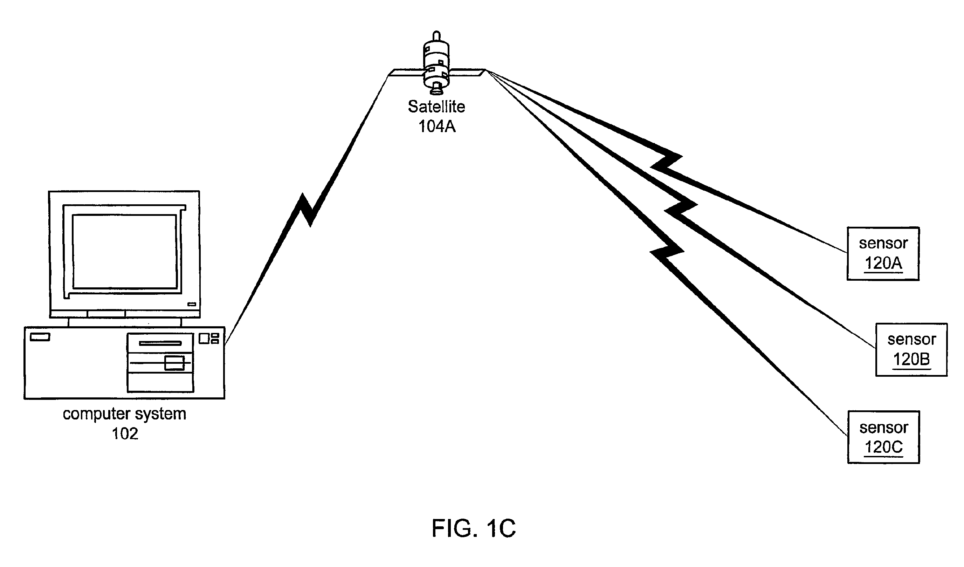

As Figures 1A and 1B show, the hub device 110 may, in turn, be in wireless communication with one or more smart sensors or data acquisition devices 120. As will be described in more detail below, the sensors 120 may each be operable to receive commands from the hub device 110, to execute one or more functions in response to the commands, e.g., to acquire data, and to send acquired data back to the hub device 110. In another embodiment, shown in Figure 1C, the computer system 102 may communicate directly with the one or more smart sensors/DAQ devices 120 via wireless means, e.g., via satellite, cell towers, etc. In other words, the hub device 110 may be omitted. In this embodiment, the smart sensors 120 themselves are the target devices 100.

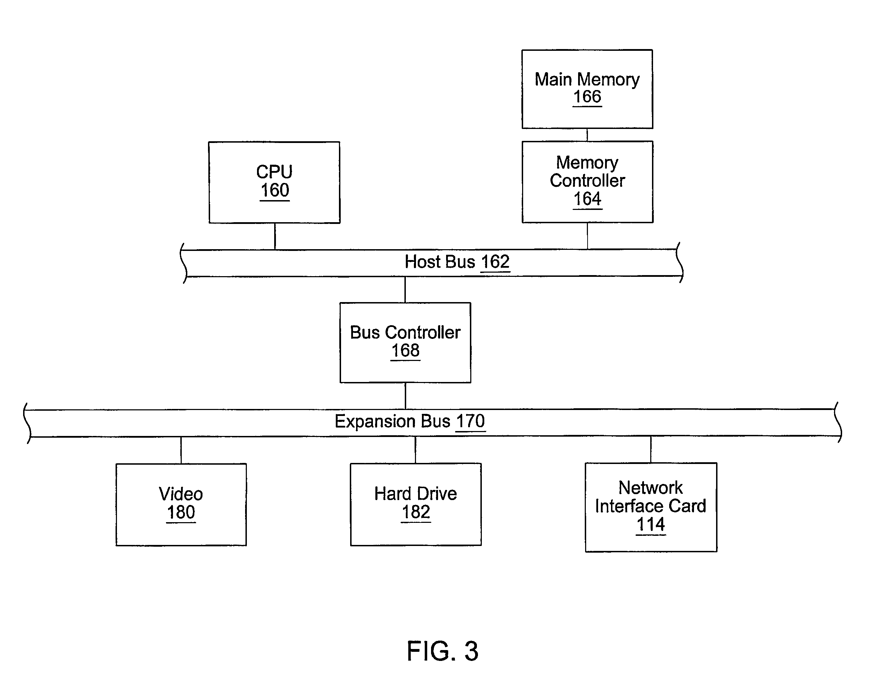

The computer system 102 may be any of various types of computer systems. Computer system 102 may include a processor, a memory medium, as well as other components as may typically be found in a computer system. The memory medium of the computer system may store a program development environment for creating programs. The computer system 102 is described in more detail below with reference to Figure 3. As used herein, the term "program" is intended to include text-based or graphical instructions which are executable, compilable, and/or interpretable by a processor to perform a specified function or functions. The term "program" is also intended to include a hardware configuration program, e.g., a program for configuring a programmable hardware element such as an FPGA.

In one embodiment, the program development environment is a graphical program development environment for creating graphical programs. An exemplary graphical program development environment is the LabVIEW development environment offered by National Instruments Corporation. Other exemplary graphical program development environments include Simulink from The MathWorks, and VEE from Agilent, among numerous others.

A user may create a program on a computer system, and computer system 102 may provide the program to hub device 110 either for execution on hub device 110 or for possible deployment to data acquisition devices 120.

Hub device 110 may include a processor and memory medium for executing programs, such as graphical programs. In one embodiment, hub device 110 executes programs received from the computer system. Execution of the program causes hub device 110 to communicate with one or more of the sensors or data acquisition devices 120. In response to the hub device 110 executing a received program, the hub device 110 may direct the sensors or data acquisition devices 120 to acquire data (e.g., from an external phenomenon, such as the "real world") and provide the acquired data to the hub device 110 (or provide the acquired data to another device). The hub device 110 may also direct the sensors or data acquisition devices 120 to generate a stimulus signal as part of its operation.

In another embodiment, the hub device 110 operates to deploy the programs to one or more of data acquisition devices 120 in a wireless fashion, and the program executes on data acquisition device 120. In yet another embodiment, a portion of the program executes on hub device 110, and another portion of the program is deployed onto one or more of data acquisition devices 120 for execution. It should be noted that in various embodiments, the hub 110 may be implemented in different devices, such as, for example, a device with an ARM processor, as described below, a PC (personal computer), a PXI chassis which includes a "PC on a card", or any other processor based device. The hub device 110 is preferably a small footprint device for reduced cost. The hub device 110 may also have a ruggedized form factor for surviving in harsh environmental conditions.

Hub device 110 may be connected to computer system 102 by a network 104 as shown. The network may be comprised of any of the various types of networks including local area networks, wide area networks, etc. One example of a wide area network is the Internet. Hub device 110 may also connect to computer system 102 through other communication mediums, such as a serial bus, e.g., USB or IEEE 1394, a parallel bus, or through wireless means. Hub device 110 may also connect to computer system 102 through a wireless mechanism, such as IEEE 802.11 (wireless Ethernet), satellite, and cellular towers, among others. Various combinations of the above wired and/or wireless networks may also be used.

Hub device 110 communicates with each of the one or more sensors 120 preferably in a wireless manner. The wireless communication mechanism may comprise any of various types of wireless transmission, including Blue Tooth, IEEE 802.11 (wireless Ethernet), RF communication, and other types of wireless communications. Further descriptions of various embodiments of the hub device 110 are provided below.

In one embodiment, the sensor devices 120 each comprise components for acquiring data from an external phenomenon. Each sensor device 120 may also include a small amount of processing capability, such as a micro-controller or processor. As mentioned above, in one embodiment, each sensor 120 includes sufficient processing power for receiving instructions from hub device 110 (or the computer system 102) to perform simple data acquisition commands, and to provide resulting data to hub device 110 (or computer system 102) in a wireless fashion. In another embodiment, each sensor device 120 includes a processor and memory medium for executing programs that have been deployed onto sensor device 120 (e.g., received by the hub device 110 from the computer system and which have been deployed onto sensor device 120). Further descriptions of various embodiments of the sensor device 120 are provided below. Each sensor device 120 is preferably a small footprint device for reduced power requirements. Each sensor device 120 may also have a ruggedized form factor for surviving in harsh environmental conditions.

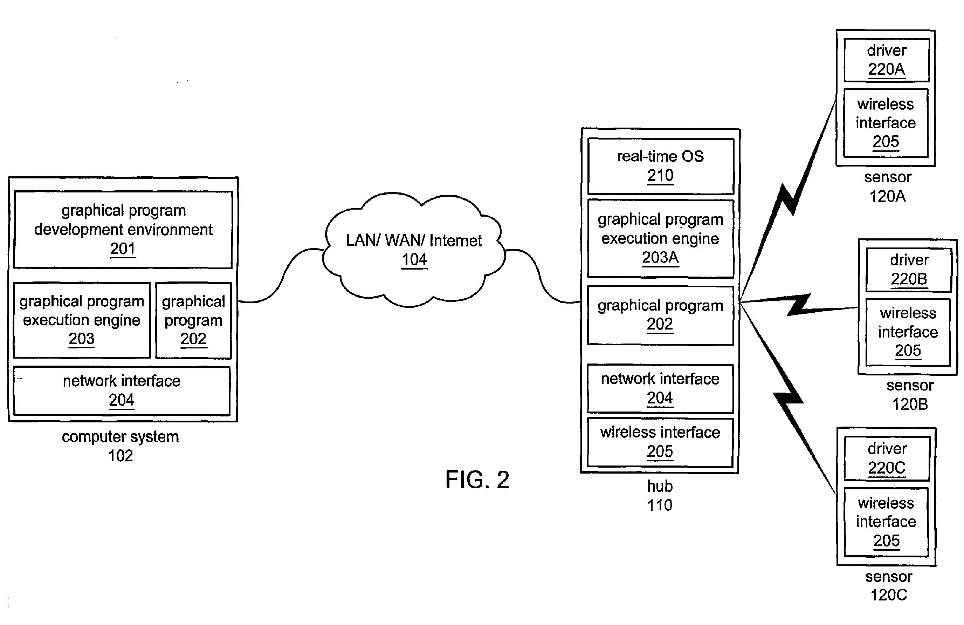

### Figure 2 - Block Diagram of the Data Acquisition System

Figure 2 is a block diagram of the system of Figure 1A, according to one embodiment. In the embodiment shown in Figure 2, the computer system 102 includes a graphical program development environment 201. The graphical program development environment 201 facilitates development of graphical programs for implementing desired functions or operations. The computer system 102 may also include a graphical program execution engine 203, henceforth referred to as the execution engine 203, which may be operable to execute graphical programs developed with the graphical program development environment 201 (or other graphical program development environments). As will be described in more detail below, the execution engine 203 may be stored on the computer system for transfer to an external device, e.g., the hub device 110. In other words, the execution engine 203 may be operable to be transferred entirely or in part to an external system to facilitate execution of graphical programs on the external device. In another embodiment, the execution engine 203 may already be installed on the hub device 110, obviating the need to transfer the engine 203 to the hub device. In one embodiment, the execution engine may comprise a graphical program execution engine virtual machine. In another embodiment, the graphical program may be converted into a format that is directly executable by an operating system without requiring an execution engine 203 deployed on either the hub device 110 or smart sensor 120.

As Figure 2 also shows, the computer system 102 may also store one or more graphical programs 202 which are executable via the execution engine 203 (or portions thereof) to perform specified functions or operations, as desired. In the embodiment shown, the graphical program 202 may be stored for transferal to an external system for execution, such as the hub device 110. The computer system 102 may also include a network interface 204 for communicating over the network 104 with devices on the network 104. For example, the network interface 204 may be an Ethernet interface for communicating over the Internet 104. Further details of the computer system 102 are provided below with reference to Figure 3. Although not shown in Figure 2, in one embodiment the computer system 102 may include or be coupled to a wireless communication device for communicating in a wireless fashion with the hub device 110 and/or smart sensors 120.

In the embodiment of Figure 2, the hub device 110 includes an operating system 210, preferably a real-time operating system (OS), for managing program execution, managing device resources, and communications, as is well known in the art. Examples of real-time operating systems 210 include, but are not limited to, Linux, NetBSD, vxWorks, eCos, and Windows CE. The embodiments of the invention described herein use the Linux OS, for such reasons as better support for embedded use, e.g., compressed flash file system, small C libraries, and utilities, and inexpensive licensing (e.g., free). The hub device 110 may also include execution engine 203A, which may include all or part of the execution engine 203 mentioned above. The execution engine 203A may facilitate execution of graphical program(s) 202 by the hub device 110. The graphical program(s) 202, shown stored on the hub device 110, may be received from the computer system 102 over the network 104 via network interface 204, also included on the hub device 110.

As Figure 2 also shows, in one embodiment, the hub device 110 may include a wireless interface 205 for communicating with the one or more sensors (wireless DAQ devices) 120. In other words, the hub device 110 may include various drivers and circuitry which facilitate wireless communication with the sensors 120 according to respective wireless communication protocols. Examples of wireless communication protocols include Bluetooth and 802.11 (Wireless Ethernet).

Finally, as shown in Figure 2, in one embodiment, each wireless sensor (DAQ device) 120 may include a wireless interface 205 for communicating with the hub device (or for communicating with the computer system 102). Additionally, each sensor 120 may include a driver 220 which may be executable by a processor (or micro-controller) on the sensor 120 to perform various functions. For example, in one embodiment, a sensor 120 may include camera functionality, where the driver may be executable to perform image acquisition functions. As another example, a sensor 120 may include equipment for measuring physical phenomenon in a plant, such as chemical plant, manufacturing plant, etc. As another example, a sensor 120 may include equipment for detecting the presence of physical substances, such as pollution, chemicals, fuel spills, bacteria, radiation, pesticides, herbicides, illegal substances, etc. As yet another example, a collection of sensors may be deployed in a vehicle, such as a commercial airline, car, bus, etc., and may be used to monitor operations/status of the vehicle. Of course, many other fields of application are also contemplated, including, but not limited to, robotics, manufacturing, control, machine vision, security, health/medicine, and scientific applications, among others. The driver program on the sensor may manage operation of the equipment, and may perform triggering and/or analysis based on the results of the detection. In other words, the driver for each sensor or DAQ device 120 may provide functionality specific to that device.

### Figure 3 - Computer System Block Diagram

Figure 3 is a block diagram for a computer system 102 suitable for implementing various embodiments of the present invention. More specifically, the computer system 102 may be operable to store and download to the hub device 110 a program (such as a graphical program) that is configured to perform a specified function. Embodiments of a method for transmitting and executing the graphical program are described below. The computer system 102 may be any type of computer system, including a personal computer system, mainframe computer system, workstation, network appliance, Internet appliance, personal digital assistant (PDA), television system or other device. In general, the term "computer system" can be broadly defined to encompass any device having at least one processor that executes instructions from a memory medium. The computer may include at least one central processing unit or CPU 160 which is coupled to a processor or host bus 162. The CPU 160 may be any of various types, including an x86 processor, e.g., a Pentium class, a PowerPC processor, a CPU from the SPARC family of RISC processors, as well as others.

The computer system 102 may include a memory medium(s) 166 on which one or more computer programs or software components according to one embodiment of the present invention may be stored. For example, the memory medium may store a graphical program execution engine, as well as one or more graphical programs, as described above. Also, the memory medium may store a graphical programming development environment application used to create and/or execute such graphical programs. The memory medium may also store operating system software, network communication software, as well as other software for operation of the computer system.

The term "memory medium" is intended to include an installation medium, e.g., a CD-ROM, floppy disks 104, or tape device; a computer system memory or random access memory such as DRAM, SRAM, EDO RAM, Rambus RAM, etc.; or a non-volatile memory such as a magnetic media, e.g., a hard drive, or optical storage. The memory medium may comprise other types of memory as well, or combinations thereof. In addition, the memory medium may be located in a first computer in which the programs are executed, or may be located in a second different computer which connects to the first computer over a network, such as the Internet. In the latter instance, the second computer may provide program instructions to the first computer for execution.

Various embodiments further include receiving or storing instructions and/or data implemented in accordance with the foregoing description upon a carrier medium. Suitable carrier media include a memory medium as described above, as well as signals such as electrical, electromagnetic, or digital signals, conveyed via a communication medium such as networks and/or a wireless link.

As Figure 3 shows, the memory medium 166 may be coupled to the host bus 162 by means of memory controller 164. The host bus 162 may be coupled to an expansion or input/output bus 170 by means of a bus controller 168 or bus bridge logic. The expansion bus 170 may be the PCI (Peripheral Component Interconnect) expansion bus, although other bus types can be used. The expansion bus 170 includes slots for various devices, such as a network interface card 114, a video display subsystem 180, and hard drive 1102 coupled to the expansion bus 170.

In the present application, the term "graphical program" or "block diagram" is intended to include a program comprising graphical code, e.g., two or more interconnected nodes or icons, wherein the interconnected nodes or icons may visually indicate the functionality of the program. The nodes may be connected in one or more of a data flow, control flow, and/or execution flow format. The nodes may also be connected in a "signal flow" format, which is a subset of data flow. Thus the terms "graphical program" or "block diagram" are each intended to include a program comprising a plurality of interconnected nodes or icons which visually indicate the functionality of the program.

A graphical program may also comprise a user interface or front panel. The user interface portion may be contained in the block diagram or may be contained in one or more separate panels or windows. The user interface of a graphical program may include various graphical user interface elements or front panel objects, such as user interface controls and/or indicators, that represent or display the respective input and/or output that will be used by the graphical program or VI, and may include other icons which represent devices being controlled. The user interface or front panel may be comprised in a single window of user interface elements, or may comprise a plurality of individual windows each having one or more user interface elements, wherein the individual windows may optionally be tiled together. As another example, the user interface or front panel may comprise user interface or front panel objects, e.g., the GUI, embedded in the block diagram. The user interface of a graphical program may display only output, only input, or both input and output. Further, in some embodiments the user interface may operate as a front panel whereby the user may interactively control or manipulate the input being provided to the graphical program during execution of the graphical program.

Examples of graphical programming development environments that may be used to create graphical programs include LabVIEW, DasyLab, and DiaDem from National Instruments, VEE from Agilent, WiT from Coreco, Vision Program Manager from PPT Vision, SoftWIRE from Measurement Computing, Simulink from the MathWorks, Sanscript from Northwoods Software, Khoros from Khoral Research, SnapMaster from HEM Data, VisSim from Visual Solutions, ObjectBench by SES (Scientific and Engineering Software), and VisiDAQ from Advantech, among others. In the preferred embodiment, the system uses the LabVIEW graphical programming system available from National Instruments.

### Embedded Devices

In various embodiments of the present invention, the hub device 110 coupled to the host computer 102 may be an embedded device 110. In various embodiments, the smart sensors 120 may be embedded devices. As used herein, the term "embedded device" refers to a small platform which includes dedicated hardware, and which includes a processor and memory (or FPGA) on which may be installed dedicated programs or software. An embedded device is typically designed to perform a defined task very well. In particular, an embedded device is typically not a device with general capabilities, such as a PC or PXI controller, for example, loaded with one or several plug-in boards, running a Microsoft OS with generous amounts of memory, system files, utilities, etc, that can be used as a measurement system, or as an office computer, or as a Web browser, etc. An example of an embedded system is an Internet remote camera, with dedicated hardware and software that implements the following tasks:
- it acquires images from the optical device,
- it compresses these images as GIF or JPEG files, or perhaps as MPEG streams, and
- it sends the images to a host computer upon request, using TCP/IP, HTTP, or multimedia streams.

Other examples of embedded devices include a measurement device with a specific type of measurement hardware and/or software for taking certain measurements, a control measurement device with a specific type of hardware and/or software for performing certain control operations, etc.

The end user does not care about how these tasks are implemented, but only wants a device that sends real-time images over the Internet. Embedded systems are often used as building blocks for more complicated applications. Thus, an embedded device generally includes both hardware and software. Additionally, embedded devices are generally built around a specialized hardware component, which is the "reason to exist" for these devices (like the camera in the above example). Other typical components include: a processor, RAM and ROM memory, a storage medium, a display, one or more communication devices, and power and over-voltage protection components.

In most embedded systems, some type of file system is needed. Generally, flash memory is used for data storage. In one embodiment, the embedded device may use two file systems: Compressed RAM (CRAMFS) to store files that do NOT change (and using as little flash space as possible), and JFFS (Joumaled Flash File System) for changing data files. The JFFS is a file system designed for safe use with flash devices. It typically minimizes flash block erases and reduces flash damage.

Embedded systems also generally necessitate some set of system tools. For example, in one embodiment, utilities such as init, ifconfig, mount, and sh, may be provided in a very small memory footprint (ram and flash). One example of such a tool set is provided by a product called BusyBox. BusyBox is a program that replaces a set of UNIX utilities with smaller versions. It is specially designed for embedded usage, i.e., for applications where a small memory footprint is more important than a full set of functionality. It can be configured to include just the needed tools.

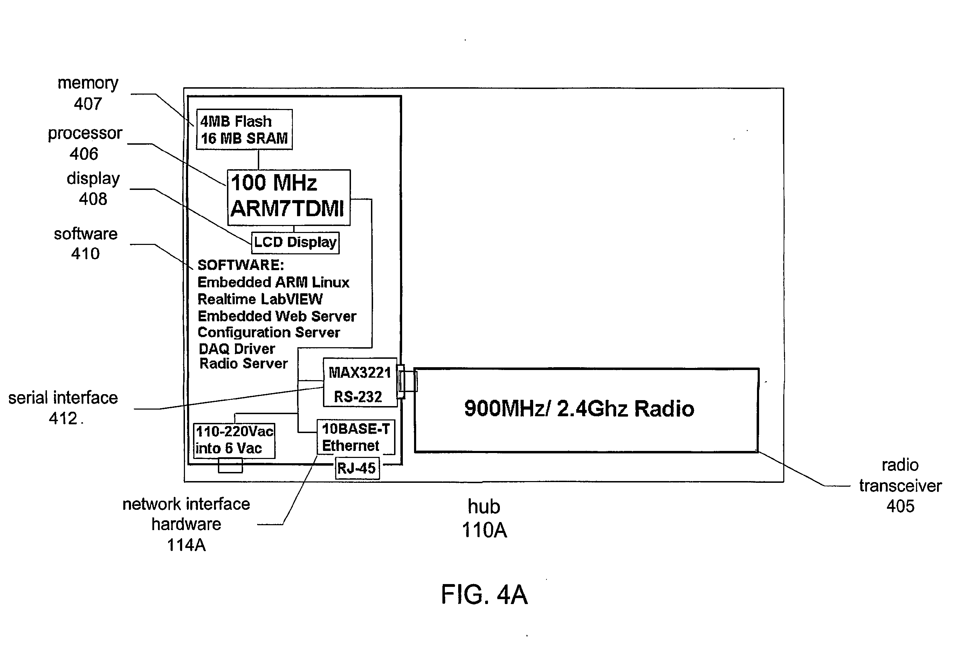

Various embodiments of the devices described below with reference to Figures 4A-4C may be suitable for use as embedded devices. In particular, in various embodiments, the devices 110 described below may be used to store and run a graphical program execution engine for executing graphical programs received from the host computer 102.

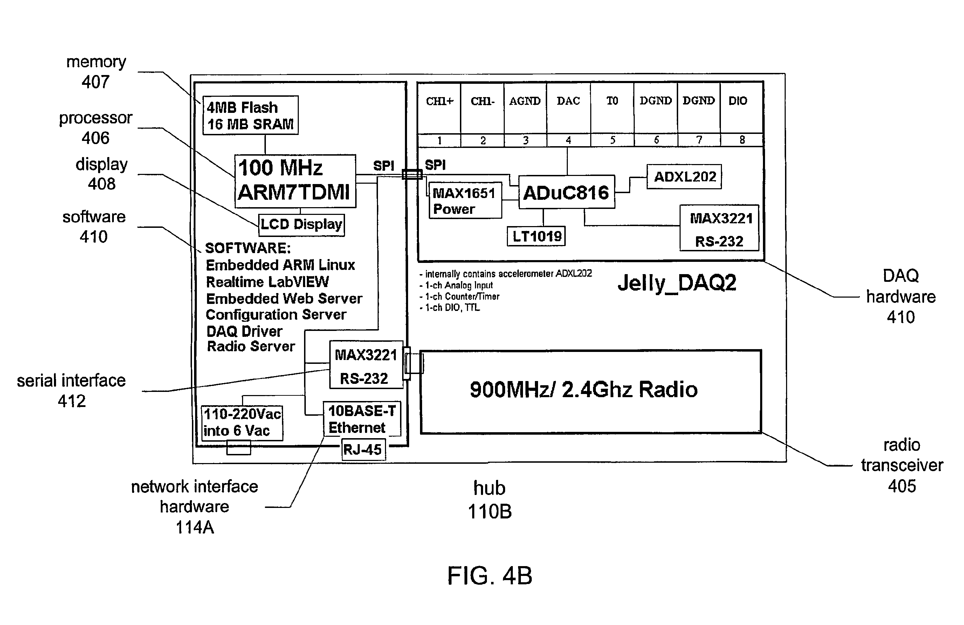

### Figures 4A and 4B - Hub Device with Wireless Communication Means

Figures 4A and 4B illustrate two embodiments of the hub device of Figures 1A, 1B, and 2. In each of these embodiments, the hub 110 includes a radio transceiver 405 for wireless communication with one or more wireless sensors or DAQ devices 120.

In the embodiment shown in Figure 4A, the hub device 110A may include a 900 MHz/2.4 GHz radio 405 for communicating with the wireless sensors or DAQ devices 120. The radio 405 may couple through a serial interface 412 to network interface hardware 114A and to a processor 406 and memory 407. In this particular embodiment, the radio 405 couples through a MAX3221/RS-232 serial interface 412 to a 10Base-T Ethernet interface with an RJ-45 connector to facilitate communication with the host computer system 102. The processor 406 may be a 100 MHz ARM7TDMI processor which uses 4MB flash and 16MB SRAM for storage. For example, the hub device 110A may store a number of software programs 410 to implement various portions of the methods described herein, including, for example, a real-time OS, e.g., embedded ARM Linux; a real-time graphical program execution engine, such as LabVIEW RT; an embedded web server, e.g., for publishing data over the network 104; a configuration server, for configuring the hub device 110, and optionally, the sensors 120; an optional DAQ driver, for operating a DAQ device; and a radio server, for managing communications using the radio transceiver 405. Additionally, the processor 406 may couple to a display 408, e.g., an LCD display which may be used to read configuration or status information for the device 110.

The embodiment of the hub device shown in Figure 4B is similar to that shown in Figure 4A, but with the addition of DAQ hardware 410. In other words, the hub device 110B includes the radio transceiver 405, processor 406, memory 407, serial interface 412, and network interface 114A, but also includes an on-board sensor 410 for performing data acquisition. Thus, in the embodiment shown in Figure 4B, the hub device 110B may be operable to acquire data itself, as well as communicate with one or more wireless sensors 120.

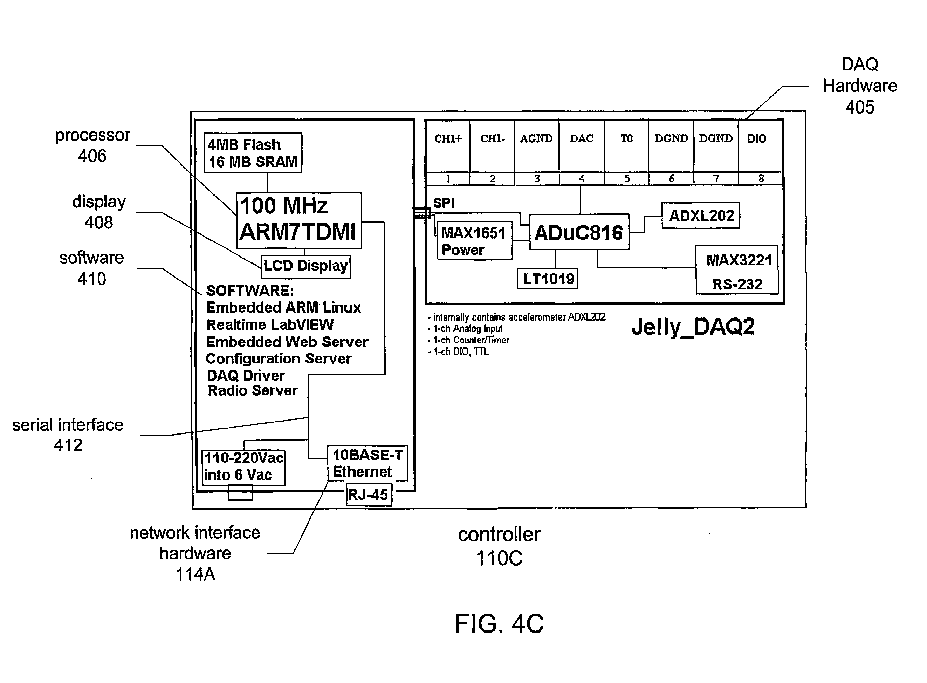

### Figure 4C - Controller

Figure 4C is a block diagram of a device 110C which is similar to those shown in Figures 4A and 4B. However, rather than performing a hub function for communication with wireless sensors, the device 110C primarily functions as a data acquisition device. More specifically, the device 110C does not include the radio transceiver 405 for communicating with wireless sensors 120, but rather includes the sensor or DAQ device 410 on-board (as does hub device 110B). Thus, the device 110C functions as a controller, collecting data via DAQ hardware 410, and transmitting the data to the host computer system 102, e.g., over the Internet 104.

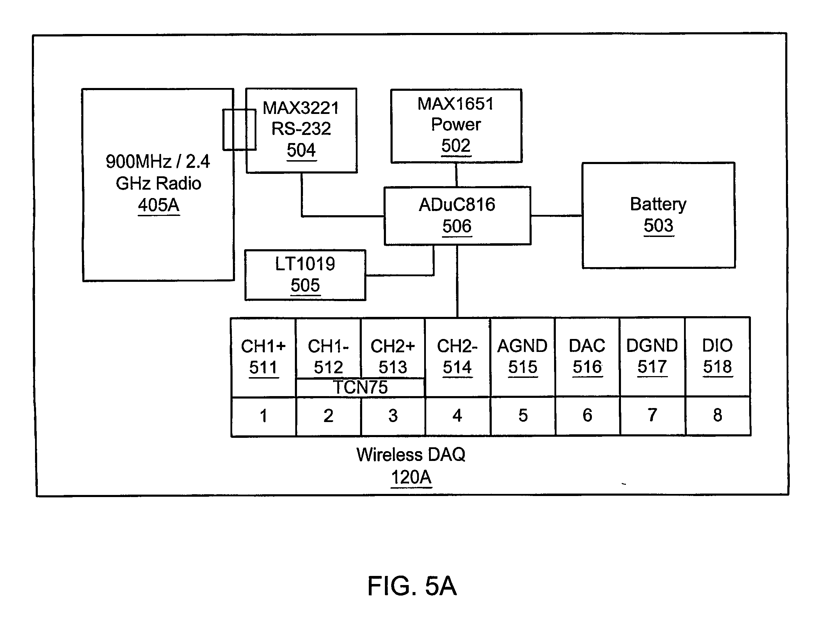

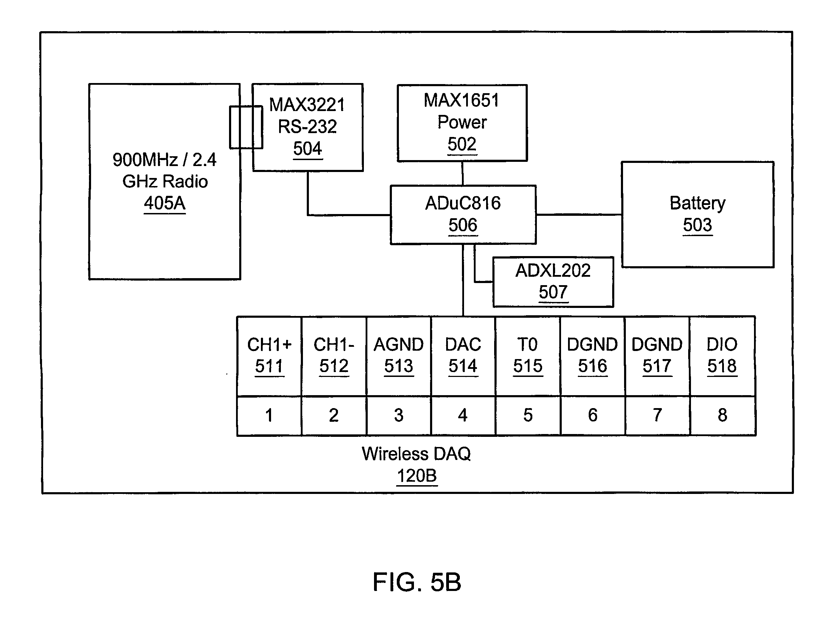

### Figures 5A and 5B - DAQ Components

Figures 5A and 5B are block diagrams of exemplary wireless DAQ devices 120. It should be noted that the DAQ devices shown in Figures 5A and 5B are meant to be illustrative only, and are not intended to limit the invention to any particular DAQ device. As Figures 5A and 5B show, each DAQ device 120 includes a radio transceiver 405A, as described above, for wireless communication with the hub device 110. The radio transceiver 405 may couple to a smart transducer front end 506, such as, for example, an ADuC816 from Analog Devices, which integrates two high-resolution 16-bit sigma delta ADCs, an 8-bit MCU, and program/data Flash/EE Memory on a single chip.

This low power device, powered by battery 503, accepts low-level signals directly from a transducer. The two independent ADCs (Primary and Auxiliary) include a temperature sensor and a PGA (allowing direct measurement of low-level signals). The ADCs with on-chip digital filtering are intended for the measurement of wide dynamic range, low frequency signals, such as those in weigh scale, strain-gauge, pressure transducer, or temperature measurement applications. The ADC output data rates are programmable and the ADC output resolution will vary with the programmed gain and output rate. The device operates from a 32 kHz crystal with an on-chip PLL generating a high-frequency clock of 12.58 MHz. The micro controller core is an 8052 and therefore 8051-instruction-set-compatible. 8 Kbytes of nonvolatile Flash/EE program memory are provided on-chip. 640 bytes of nonvolatile Flash/EE data memory and 256 bytes RAM are also integrated on-chip. The ADuC824 also incorporates additional analog functionality with a 12-bit DAC, current sources, power supply monitor, and a band gap reference. On-chip digital peripherals include a watchdog timer, time interval counter, three timers/counters, and three serial I/O ports (SPI, UART, and I 2 C-compatible). On-chip factory firmware supports in-circuit serial download and debug modes (via UART), as well as single-pin emulation mode via the EA pin. The part operates from a single 3.3 V supply. When operating from 3 V supplies, the power dissipation for the part is below 10 mW. The device 120 may communicate with single board computers, e.g., the ARM processor 406 of the hub/controller device 110 either via SPI interface, as in Figures 4B and 4C, or via RS-232 and radio interface, as in Figures 4A and 4B.

As Figures 5A and 5B also show, the DAQ devices 120 may include a number of ports 1-8 (511-518) which may provide various functions such as channels, analog and digital grounds, digital/analog conversion, and digital I/O, among others.

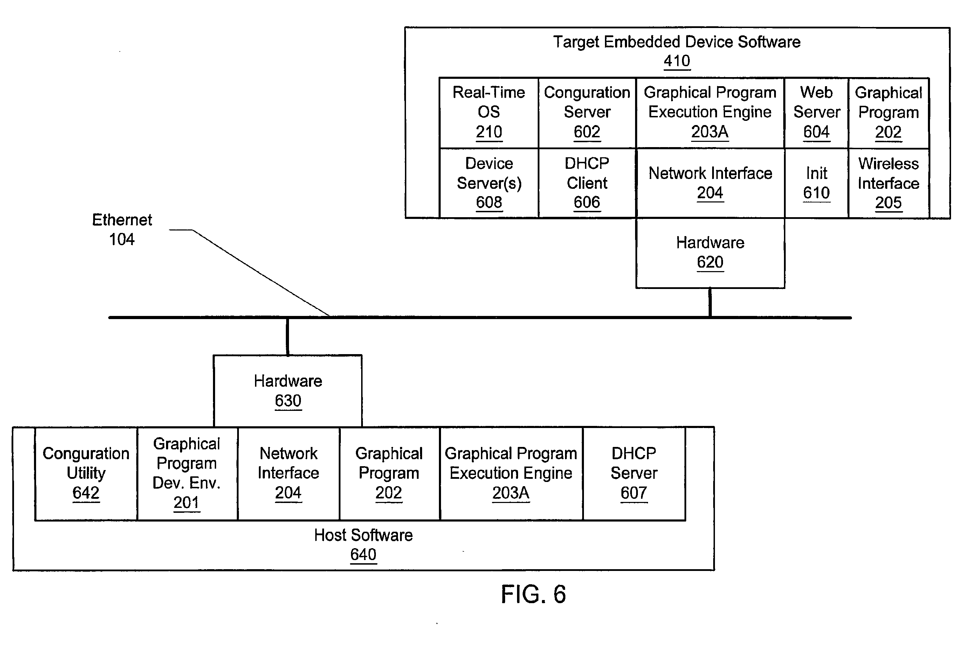

### Figure 6 - Host and Target Device Software

Figure 6 illustrates the host computer system software and the target device (hub/controller) software, according to one embodiment. As Figure 6 shows, in one embodiment, in addition to the software described above with reference to Figure 2, i.e., the graphical program development environment 201, execution engine 203, graphical program 202, and network interface 204, the host computer system 102 may also include DHCP server software 607 and a configuration utility 642. Similarly, in addition to the execution engine 203A, graphical program 202, real-time OS 210, wireless interface 205, and network interface 204, the target device 100 (hub/controller 110) may also include DHCP client software 606, web server software 604, one or more device servers 608, an initialization program 610, and a configuration server 602.

The host computer system 102 may include the DHCP server software 607 to facilitate network setup by the target device 100, as described below, and may also include the configuration utility 642 to allow a user to easily configure the target device 100, and optionally, any connected DAQ devices 120.

In one embodiment, the additional target device software may provide the following functionality:
Init 610 - a process specific to the System V UNIX operating systems. Its role is to bring up systems, restart services that need to be restarted, and manage orphaned children (as described in UNIX manuals).
DHCP client 606 - the second started process. The target device 100, as described above, is connected to a network 104, and so the DHCP client 606 tries to contact DHCP server 607 and configure the networked device 110 as told. In one embodiment, the target device 100 may be configured by default to automatically setup its network. In an embodiment where the target device is configured with a fixed IP address, then the DHCP client program may not be required. If the DHCP client is unable reach a DHCP server, e.g., within an interval of 30 seconds, then a static default network configuration may be loaded.
Configuration server 602 - runs continuously on the target device 100, interacting with configuration utilities running on the host computer 102 to allow the user to configure the target device 100. The configuration server 602 interacts with the device server(s) 608, managing data communication between the target device 100 and the host computer 102.
Device servers 608 - e.g., DAQ and wireless servers, are permanently active drivers, implementing communication with local DAQ devices that are attached to the mother board of the target device 100 via SPI or serial interface. These drivers may talk to the configuration server 602 and the execution engine 203A (e.g., LabVIEW RT) using a local pipes system. Examples of device servers 608 are provided below.
Web server 604 - runs permanently, serving web pages upon request from the host computer 102. For example, the target device 100 may continuously execute a web server that hosts the target device web application. In one embodiment, the web server software used is thttpd, a small but very fast and capable web server designed for maximum performance and a low memory footprint Its main qualities are:
   Simple: It handles only the minimum necessary to implement HTTP/1.1. Well, maybe a little more than the minimum.
   Small: It also has a very small run-time size, since it does not fork and is very careful about memory allocation.
   Portable: It compiles cleanly on most Unix-like OSs, e.g., FreeBSD, SunOS 4, Solaris 2, BSD/OS, Linux, OSF.
   Fast: In typical use about as fast as the best full-featured servers (Apache, NCSA, Netscape). Under extreme loads it may be much faster.
   Secure: It goes to great lengths to protect the web server machine against attacks and break-ins from other sites.
Execution engine 203A - e.g., LabVIEW Realtime(LVRT) runs continuously, waiting for connections and executing the loaded VIs. For example, LVRT runs in a memory and CPU load jail. This prevents LVRT from consuming the entire CPU power and system memory, allowing other processes to have a fair chance of doing their job, regardless of the VI that is running in parallel.

Additionally, an optional shell program may be include for debug and wait for command on COMO purposes. The shell program may be disabled prior to delivery to a user.

Many different device server 608 are contemplated for use in various embodiments of the present invention. For example, device servers 608 may support hardware capabilities for such example DAQ devices 120 as:
DAQ device 1
   2 AI
   1 AO
   1 External Temp Ref
   1 DIO
   1 Power Management
DAQ device 2
   1 Accelerometer
   1 AI
   1 AO
   1 Counter/Timer
   1 DIO
   1 Power Management
DAQ device 3
   2 RTD
   1 DIO
   1 Power Management
DAQ device 4
   4 Relay Drive
   1 DIO
   1 Power Management
DAQ device 5
   1 AI
   4 DIO
   1 Power Management

In various embodiments, the following functions may be supported (among others):
1. Analog Input
   AI_Read(SlaveID, channelID, polarity, range, rate, value)
   Calibrate(SlaveID, channelID, calibration type)
   Test(SlaveID, channelID, test type, transducer detected)
2. Analog Output
   AO_Write(SlaveID, channelID, voltage)
3. Digital Input/Output
   DIG_Read(SlaveID, channelID, state)
   DIG_Write(SlaveID, channelID, value)
4. External Temperature Reference
   ETS_Read(SlaveID, channelID, value)
5. Accelerometer
   ACC_Read(SlaveID, channelID, value1, value2)
6. RTD
   RTD_Read(SlaveID, channelID, value)
7. Counter/Timer
   CTR_Start(SlaveID), channelID)
   CTR_Read(SlaveID), channeled, value)
8. Relay
   DIG_Write(SlaveID, channelID, value)
9. Power Management
   Power_Read(SlaveID), channelID, value)

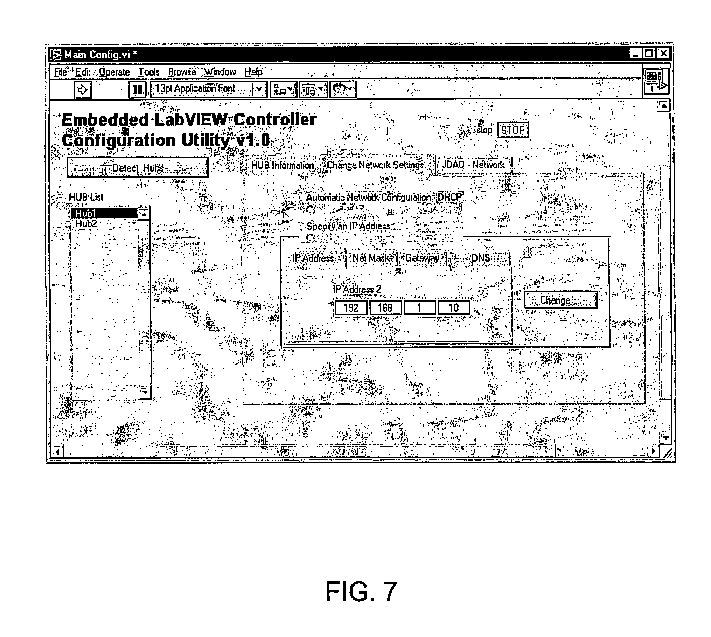

### Figure 7 - Configuration Utility

Figure 7 illustrates one embodiment of the configuration utility 642. As Figure 7 shows, the configuration utility 642 may provide means for setting and/or modifying the network configuration for the various components of the system, e.g., target devices 100 and DAQ devices 120, as well as for detection of networked hub devices 110 and/or DAQ devices 120. It is noted that the configuration utility interface, as shown in Figure 7, is preferably displayed on a display device of the host computer system.

In one embodiment, the configuration server 602 implements a configuration service running on the target device 100. This service may pass data between a program running on the Host computer, e.g., the configuration utility 642, and device servers 608 running on the target device 100. In some embodiments, the graphical program execution engine, e.g., LabVIEW RT may be capable of talking directly to the device servers 608, and so may not need to use the services of the configuration server 602. In one embodiment, communication with the configuration server 602 may be performed using UDP protocol commands on UDP port 43567. In general, there may be three ways to communicate with the configuration server 602:
1) Through a target device 100 user interface (e.g., a 4x16 char LCD display and four buttons).
2) By executing the configuration utility 642 on the host computer 102 (e.g., from inside LabVIEW or as an executable) that then detects and configures target devices 100 over the network. This is the most frequent situation. There are cases when it is not possible to detect target devices 100 over the network, for example, when there is no operable DHCP server present. The configuration utility may provide ways to manually configure the target devices 100 in this scenario.
3) From inside a web browser, by accessing the configuration page of the target device 100. This method generally works once the target device 100 is configured, and may be used to change different configuration parameters.

In one embodiment, the configuration server 602 may start running at target device boot-up. It may assume an active role during the system boot sequence, passing the target device configuration to the device drivers. After boot-up, the configuration server 602 may run in background, waiting for commands (either from the network 104 or from the local user interface). The configuration utility program 642 and the web server 604 may be allowed to send commands to configuration server 602. For example, in one embodiment, a UDP based protocol may be defined for this communication, i.e., for communication between device servers, LabVIEw Realtime, and the configuration utility.

In one embodiment, the following services may be available in the protocol:
Discovery service - Detection of target devices 100 may be performed using special broadcast UDP packets. The discovery packet is the only valid UDP broadcast packet. When a discovery request is received a reply UDP packet may be sent.
Request device current configuration - Once the discovery phase is completed, all other information exchange between the Host and the target may be performed by using UDP requests and replays to unicast (normal) IP addresses.
Change device network configuration - configuration fields such as: serial number of target device 100, UDP port, mask, ELC's MAC address, IP address, Netmask, and Gateway information may be modified.
Read and change device name - read the name and change the name of a particular target device 100.

Thus, in one embodiment, the configuration utility 642 may reside on the host computer system 102, and communicate with the configuration server 602 on the target device 100. The configuration utility 642 may provide the following services:
1. detection via DHCP server of all ELC's connected to the network;
2. manual target device configuration (IP address, mask, etc);
3. change of network configuration;
4. detection of DAQ devices (local via SPI interface and remote via radio interface); and
5. configuration of DAQ devices that are attached to the target device 100.

Thus, the configuration utility executable may allow detection and configuration of the target devices 100 on the network, e.g., hub devices 110, as well as their respective DAQ devices 120. It should be noted that in one embodiment, the embedded system may be monitored by using a web browser or by programming the target devices 100 by using DHCP or TCP/IP calls from inside the programming environment.

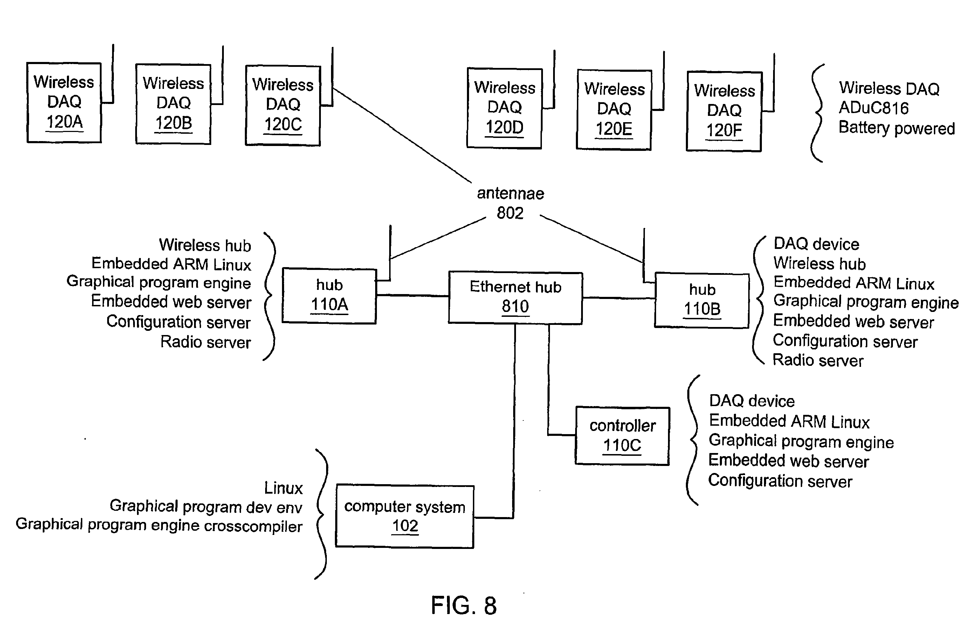

### Figure 8 - Extended DAO System

Figure 8 is a block diagram of one embodiment of an extended DAQ system, according to the present invention. In the example DAQ system of Figure 8, the computer system 102 is coupled to an Ethernet hub 810 to allow operation of multiple target devices 100, e.g., hub devices 110, with respective DAQ devices 120. In particular, in the embodiment shown, the Ethernet hub 810 couples the computer system 102 to target devices 100 representing the three embodiments of Figures 4A, 4B, and 4C, respectively. It is noted that the Ethernet hub 810 is not the target device hub shown in Figures 1A, 1B, 2, 4A and 4B, but rather is a simple Ethernet hub whose sole functionality is to provide additional network connections for the host computer system 102.

As Figure 8 shows, the Ethernet hub 810 may couple to hub 110A, which communicates wirelessly to wireless DAQ devices (sensors) 120A-120C via antennae 802. Note that in this embodiment, hub 110A includes wireless hub functionality, and is loaded with embedded ARM Linux, the graphical program execution engine, an embedded web server, a configuration server, and a radio server.

In one embodiment, the radio server may be a driver used to access wireless (radio enabled) measurements points. For example, the radio server may be operable to discover remote DAQ devices that enter and exit a radio network (centered around a target device 100), and to interrogate remote DAQ devices for data at user request. The radio server may communicate with programs running locally on the target device 100 by using named pipes as a data exchange mechanism.

As Figure 8 also shows, the Ethernet hub 810 may couple to hub 110B, which communicates wirelessly to wireless DAQ devices (sensors) 120D-120F via antennae 802. Note that in this embodiment, hub 110B includes an on-board DAQ device, in addition to the wireless hub functionality, embedded ARM Linux, the graphical program execution engine, embedded web server, configuration server, and radio server, described below.

Finally, the Ethernet hub 810 may couple to controller 110C, which, as described above with reference to Figure 4C, includes a DAQ device, but does not provide wireless functionality. As shown, in this embodiment, the controller 110C includes embedded ARM Linux, the graphical program execution engine, the embedded web server, and the configuration server.

Thus, in this embodiment, the DAQ system may include a plurality of hubs and/or controllers, each of which may acquire data from one or more sensors or DAQ devices, and send the data to the host computer system 102 for storage, analysis, and/or transmission to other systems.

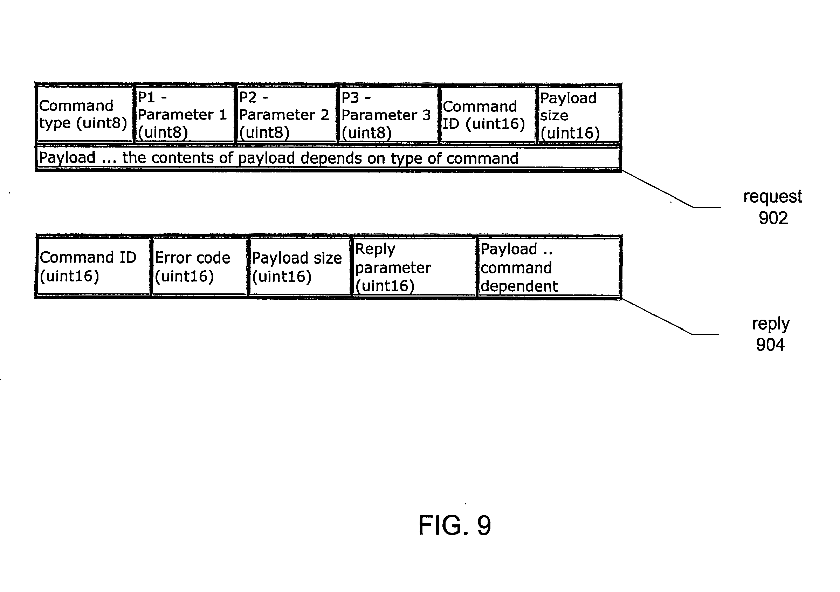

### Figure 9 -Formats for Requests and Replies

Figure 9 illustrates one embodiment of a format for requests and replies, such as may be used for inter-process communications using named pipes in Linux. As is well known in the art, named pipes are special files that act like FIFOs in the following way: one program opens the file for write and other program opens the same file for read. The reader receives what the writer sends. The transfer operation is guaranteed to be atomic when the amount of transferred data is less than 4 kbytes.

As Figure 9 shows, in one embodiment, a request 902 may include a command type, various parameters (P1, P2, and P3), a command ID, a payload size, and the payload, the contents of which may depend upon the type of command. Examples of commands are provided below. As Figure 9 also shows, in one embodiment, a reply 904 may include a command ID, an error code, a payload size, a reply parameter, and a command-dependent payload.

Example commands may include one or more of:
1. Retrieve the list of active DAQ devices 120. This command may be used to browse the DAQ device network.
   Request:
   Command type: 1
   P1, P2, P3: not used
   Command ID: used to keep track of request/replies
   Payload size: should be 0
   Payload: not used
   Reply:
   Command ID: Should be the same with Command ID from request
   Error code: 1 means "no error". Any other value signals that an error occurred during command processing. See error codes table at the end of the document for details.
   Reply parameter: not used
   Payload size: represent the amount of data returned, and is equal with the number of active devices multiplied by 2
   Payload: contains an array (uint16[]) with addresses of active devices. The number of active devices is equal with payload size divided by 2
2. Read the target device name and type. Interrogate a target device and read its name.
   Request:
   Command type: 2
   P1: address of device
   P2, P3: not used
   Command ID: used to keep track of request/replies
   Payload size: should be 0
   Payload: not used
   Reply:
   Command ID: Should be the same with Command ID from request
   Error code: 1 means "no error". Any other value signals that an error occurred during command processing. See error codes table at the end of the document for details.
   Reply parameter: type of the device.
   Payload size: represents the amount of data returned, and is equal with the length of device name
   Payload: contains the device name
3. Change the target device name. Interrogate a target device and change its name.
   Request:
   Command type: 3
   P1: address of device
   P2, P3: not used
   Command ID: used to keep track of request/replies
   Payload size: the size of the new name
   Payload: new name stored here
   Reply:
   Command ID: Should be the same with Command ID from request
   Error code: 1 means "no error". Any other value signals that an error occurred during command processing. See error codes table at the end of the document for details.
   Reply parameter: not used
   Payload size: represents the amount of data returned, and is equal with the length of device name
   Payload: contains the current device name. It is the same with the requested name, in the case o an error it will be unchanged
4. Read a value from a DAQ device.
   Request:
   Command type: 4
   P1: address of device
   P2: the channel to read
   P3: not used
   Command ID: used to keep track of request/replies
   Payload size: not used
   Payload: not used
   Reply:
   Command ID: Should be the same with Command ID from request
   Error code: 1 means "no error". Any other value signals that an error occurred during command processing. See error codes table at the end of the document for details.
   Reply parameter: not used
   Payload size: represents the amount of data returned
   Payload: contains the value read from channel. Its type depends on channel type
5. Write a value to a DAQ device.
   Request:
   Command type: 5
   P1: address of device
   P2: the channel to write
   P3: not used
   Command ID: used to keep track of request/replies
   Payload size: not used
   Payload: not used
   Reply:
   Command ID: Should be the same with Command ID from request
   Error code: 1 means "no error". Any other value signals that an error occurred during command processing. See error codes table at the end of the document for details.
   Reply parameter: not used
   Payload size: not used
   Payload: not used

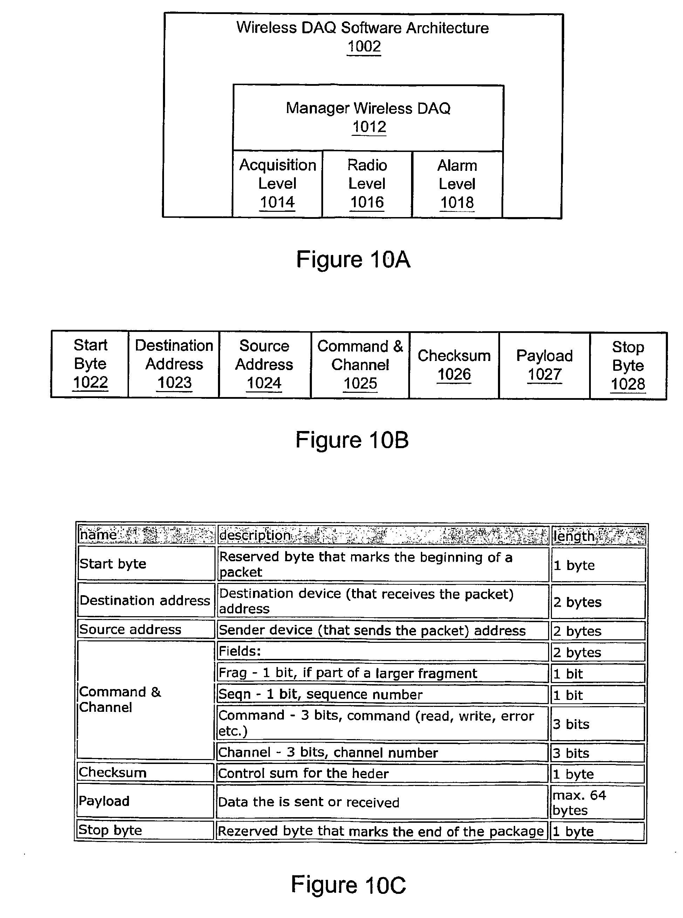

### Figure 10A - Wireless DAQ Device Software Architecture

Figure 10A illustrates one embodiment of a software architecture 1002 for a wireless DAQ device 120. In one embodiment, the wireless DAQ devices 120 include an 8051 core micro-controller with 8kb of program memory, and a 900 MHz radio. In this embodiment, the software which executes on this hardware includes a manager program for the wireless DAQ 1012, as shown in Figure 10A, which may manage the operation of three other software components, namely, an acquisition level 1014, a radio level 1016, and an alarm level 1018.

In one embodiment, the radio level implements the transmission/reception of radio packets, described below with reference to Figure 10B. The acquisition level implements data acquisition, conversion and transfer to radio level. Finally, the alarm level may activate when special situations such as loss of power, or alarm levels occur. These special situations are treated by sending an alarm message via the radio level to the target device 100 for user notification.

Communication between the three levels may be performed by using a common communication buffer. This may be possible because in one embodiment, the DAQ devices 120 can either talk or listen, but not both in the same time. Data resulting from the ADC conversion by the DAQ devices may be deposited directly into this common communication buffer.

In one embodiment, a piconet architecture of master-slave type may be implemented. For example, the Master (a target device 100) may initiate and control communication with the DAQ devices 120. With the exception of the alarm packets, everything going from DAQ devices 120 to the Master target device 100 is the result of a request from the target device 100, and so the target device generally initiates communication exchanges. As mentioned above, in one embodiment, radio communication may be implemented by using 900 MHz radios, e.g., the 9Xstream radio transceiver, available from MaxStream. Some desirable features of these radio transceivers may include all or part of:
1. Frequency Hopping Spread Spectrum (FHSS) technology
2. Resistant to noise and interference.
3. Up to ¼ mile effective range (25 miles with high gain antenna, line of sight)
4. Multi-drop (broadcast) networking protocol
5. Easy to integrate. No knowledge of RF required. Interfaces to any micro-controller
6. Small size
7. Exceptional data transfer performance
8. Received packets are analyzed for data corruption using proprietary technology
9. FCC approved, no licensing or further approval necessary.

### The Radio Level

In one embodiment, the radio level may be divided in two sub-levels, as follows:
MAC (Medium Access Control) access - contains the set of functions that communicate with this particular radio transceiver (9Xstream from MaxStream). In one embodiment, MAC access control functions may include:
   1. Generation of Start/Stop bytes at transmission and detection of these bytes at reception time;
   2. Elimination of special bytes (Start, Stop, Escape) from a packet at reception time, and generation of Escape sequences at transmission time;
   3. Recognize the address at reception time, ignore packets that are not sent to the receiver; and
   4. Verification of the control sum in the header of the received packets.

### Figures 10B and 10C - Radio Communication Packet Structure

Figures 10B and 10C illustrate an exemplary radio packet structure for use by the radio transceivers 405 on-board the hub 110 and DAQ devices 120. Figure 10B illustrates the packet structure, and Figure 10C provides the meanings and size of the various fields of the packet. This particular packet structure is used by the MaxStream 9Xstream transceivers mentioned above. It should be noted that in other embodiments of the invention, other radios and/or other radio packet structures may be used as desired.

As Figure 10B shows, in this embodiment, the radio packet may begin with a Start byte 1022. The Start byte 1022 is a single reserved byte that marks the beginning of a packet. A 2 byte destination address 1023 may then follow, indicating a destination device address (that receives the packet). After the destination address 1023, a 2 byte source address 1024 indicating an address of the sender device (that sends the packet) may follow.

Then, a 2 byte bitfield called Command & Channel 1025 may be included, where the bits include a Frag bit, indicating whether the packet is part of a larger fragment, a Seqn bit, indicating a sequence number, a 3 bit Command (read, write, error, etc.), and a 3 bit channel number.

After the Command & Channel bytes, a Checksum byte 1026 may be included as a control sum for the packet header. The Checksum may be used for error detection, as is well known in the art.

The packet may also include a payload 1027 which is the data sent or received. In this embodiment, the payload 1027 is limited to a maximum size of 64 bytes.

Finally, the packet may be terminated with a Stop byte 1028 that marks the end of the packet.

### Radio communication control

Radio communication control is maintained by a set of functions that implement packet reception/transmission. The radio level may determine the "Command" field from inside a communication packet. For example, the following commands may be defined:
Channel access commands
   PKT_READ - channel read
   PKT_WRITE - channel write
Communication control
   PKT_PING - packet that is sent to the Master to signal an active DAQ device 120
   PKT_POLL - packet that is sent by the Master to find active DAQ devices 120
Special packets
   PKT_ACK - reception acknowledgement
   PKT_ERROR - error notification. The error code is located in the Payload section of the packet.
   PKT_ALARM - alarm notification. The alarm code is located in the Payload section of the packet

In one embodiment, detection of active DAQ devices 120 in the piconet may be performed by the radio server executing on the Master target device 100. The Master may send, at predefined time intervals, interrogation packets of type PKT_POLL. These may be broadcast type packets, and therefore may be received by all Slave devices that belong to the piconet. Slave devices that are active may answer the PKT_POLL message. An active device is a DAQ device that has been identified by the Master, that understands and receives PKT_READ and PKT_WRITE commands from the Master, and that understands and receives PKT_PING commands from the Master (to keep the Master awake in case there is no Read/Write request for a specified time period for that device)

### Channel Read/Write

Access from radio communication to the DAQ driver functions (ex: AI_Read(), AO_Write(), etc) may be implemented by PKT_READ and PKT_WRITE. Channel and operation type information may be contained in the Command & Channel field of these functions. The DAQ device 120 that has been contacted by a PKT_READ call may answer by sending the acquired data. If contacted by a PKT_WRITE call, the DAQ device 120 may send a packet of type PKT_ACK to acknowledge that the write operation has been executed.

The radio server running on the target device 100 may re-send packets that have not been confirmed as received by slave DAQ devices 120. The number of re-transmissions may be limited, so if nothing happens after a certain number of successive re-transmissions, the target device 100 may consider that particular DAQ device in-active and it may delete the device from it list of active devices. An inactive DAQ device 120 may become active again by answering the target device 100 that sent PKT_POLL message.

### The Alarm Level

PKT_ALARM type packets are reserved for detection of special situations, also called alarms, and may be sent by DAQ devices 120 to the Master target device 100 in case some predefined alarm situation occurs. The Master may confirm, via a PKT_ACK packet, that it received the alarm notification.

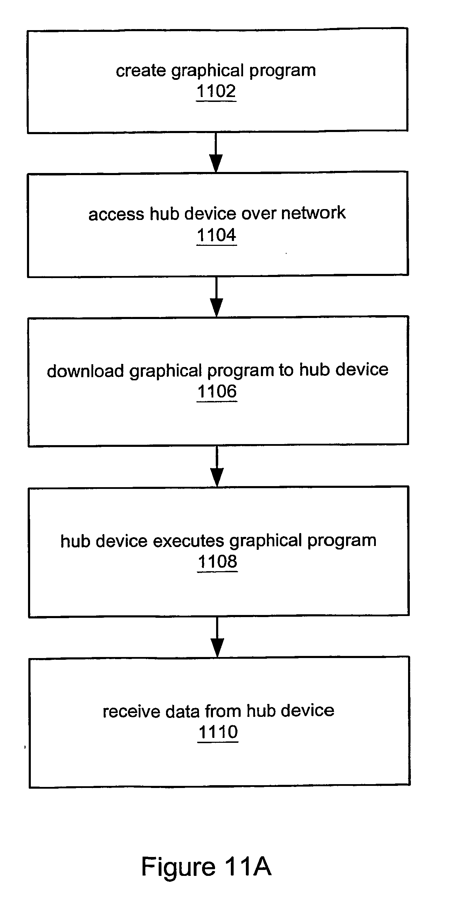

### Figure 11A - Method For Executing a Graphical Program

Figure 11A illustrates one embodiment of a method for creating, deploying, and executing a graphical program to perform a function. More specifically, a method is described for creation and deployment of programs on the hub device 110 for performing data acquisition in the system of Figure 1A (and 1B). It is noted that in various embodiments, some of the steps may be performed in a different order than shown, or may be omitted. Additional steps may also be performed. As shown, this method may operate as follows. It is further noted that although the methods herein are described in terms of graphical programs, it should be noted that the techniques described are broadly applicable to any other types of program as well.

In one embodiment, the user first may create a program that is operable to execute within the hub device 110, as indicated in 1102. In creating the program, the user may be aware of the one or more sensor devices 120 which will be acquiring data in the system. The user may include code in the program which is operable to execute on the hub device 110, and which operates to provide instructions or commands to one or more of sensor devices 120 to direct the sensor devices 120 to acquire data at certain times or based on certain detected events.

In one embodiment, the user may create a graphical program (or block diagram) on computer system 102. As noted above, a graphical program may comprise graphical code, i.e., two or more interconnected nodes or icons which visually represent operation of the program. The nodes may be interconnected in one or more of a data flow, control flow, or execution flow format. The graphical program may be a LabVIEW program, a Simulink program, a VEE program, or other type of graphical program. In creating the program, the user may place icons within the graphical program representing each of the respective sensor devices 120 that are being used. The user may also include graphical code in the program which operates to provide instructions to the respective sensor device icons, e.g., by connecting other graphical nodes to the sensor device icons in the graphical program. Thus, the graphical program may be created or assembled by the user arranging on a display a plurality of nodes or icons and then interconnecting the nodes to create the graphical program. In response to the user assembling the graphical program, data structures (or code) may be created and stored which represent the graphical program.

As noted above, the graphical program may comprise a block diagram and may also include a user interface portion or front panel portion. Where the graphical program includes a user interface portion, the user may assemble the user interface on the display. As one example, the user may use the LabVIEW graphical programming development environment to create the graphical program. The user interface code may be designed to execute on the host computer 102, with the block diagram or graphical program designed to execute on the hub device 110.

In an alternate embodiment, the graphical program may be created in step 1102 by the user creating or specifying a prototype, followed by automatic or programmatic creation of the graphical program from the prototype. This functionality is described in U.S. Patent Application Serial No. 09/587,6102 titled "System and Method for Automatically Generating a Graphical Program to Perform an Image Processing Algorithm." The graphical program may be created in other manners, either by the user or programmatically, or a combination thereof, as desired. The graphical program may implement a measurement function that is desired to be performed by the DAQ device or instrument. For example, in an embodiment where the instrument is an image acquisition device (e.g., a smart camera), the graphical program may implement an image processing function.

Once the program has been completed, then in step 1104, the user may cause the computer system to send the program over network 104 (or other communication medium) to hub device 110. The hub device 110 may receive and execute the program. In executing the program received from the computer system, the hub device 110 may be directed by the program to provide certain commands to respective ones of sensor devices 120 to cause the sensor devices to acquire data and provide this acquired data to the hub device 110. Examples of the types of commands that may be implemented by sensor devices 120 include, but are not limited to, single/multiple point read, writes (e.g., for configuration) start, and stop, among others.

In one embodiment, the graphical program source code may be sent to the hub device 110. In another embodiment, the graphical program may be compiled (e.g., by software executing on the host computer 102) to object code (or other machine executable or interpretable code) which may then be sent to the hub device 110. In one embodiment, prior to sending the program to the hub device 110, the execution engine 203A may be deployed to the hub device 110. In another embodiment, the hub device 110 may already have the execution engine 203A installed. In another embodiment, the hub device 110 may not require a graphical program execution engine. For example, a user who creates a Simulink diagram may use the MathWorks Real Time Workshop product to convert the Simulink diagram into C code (or other text code), and then may compile the C code to machine language code for provision to the hub device 110. This machine language code may not require an execution engine, but rather may simply execute under an operating system.

Then, as shown in the flow chart of Fig. 11A, in step 1108 the hub device 110 executes the program received from the computer system, e.g., via the execution engine 203A. In one embodiment, the hub 110 may execute the program upon reception of the program from the host computer 102. In another embodiment, after the program has been transferred to the hub 110, the user may send a command to the hub over the network 104 invoking execution of the program by the hub 110.

As noted above, in one embodiment, the program deployed to the hub device may comprise a hardware configuration program, e.g., for configuring an FPGA on the hub device to perform the measurement function, i.e., to send commands to the measurement device to perform the function. In other words, the program, e.g., the graphical program, may be compiled or converted to a hardware configuration program, then deployed onto the FPGA on the hub device. Alternatively, the hardware configuration program may be transmitted to the hub device, and the hub device may then wirelessly deploy the hardware configuration program onto an FPGA of the measurement device.

In an exemplary embodiment, the execution of the program results in some data being acquired. As described above, in response to program execution on the hub device 110, the one or more sensors 120 may acquire data and provide this acquired data to the hub 110. This data may then be sent (e.g., over the network 104 or other communication medium) to the host computer system 102. In one embodiment, the host computer 102 may execute GUI code to present a GUI on its display. The data received from the hub device 110 (or received directly from the one or more sensors 120) may be displayed in this GUI on the host computer 102. In this manner, the system may operate in a similar manner to LabVIEW RT, as described in U.S. Patent No. 6,173,438.

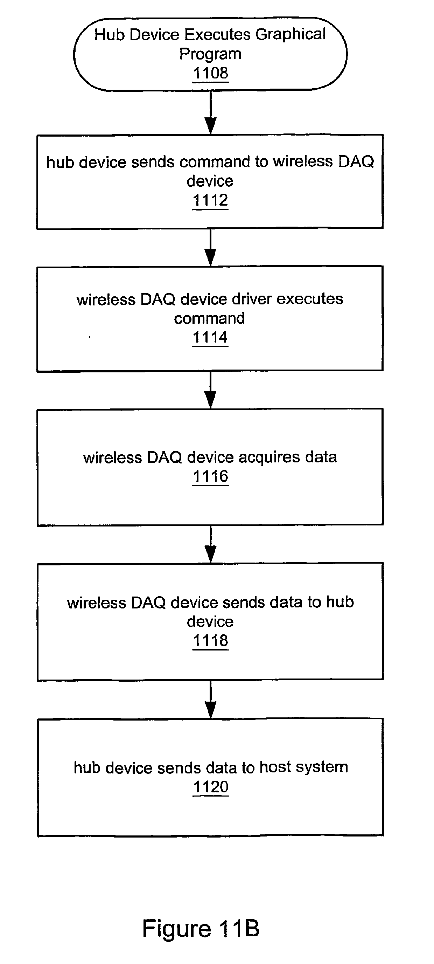

In other embodiments, the acquired data may be sent to other systems. For example, in one embodiment, the hub device 110 may use web server program 604 to publish the acquired data to a website, where a system with a web browser may then access the data. In another embodiment, the hub device 110 may execute web server program 604 to essentially act as a website. In another embodiment, the hub may send the data to one or more other systems coupled to the network 104 (e.g., the Internet). Thus, the hub may send the acquired data to any networked devices, as desired. Further details of the program execution are described below with reference to Figure 11B.

Various operations may be performed in response to the acquired data. For example, the host computer 102, or another computer, may perform analysis on the data. This analysis may lead to a certain operation, such as notification of excessive levels of a certain substance (e.g., pollution), changes in a manufacturing plant, changes in a process control facility, etc.

### Figure 11B - Execution of the Graphical Program

Figure 11B flowcharts a more detailed embodiment of the graphical program execution of step 1108 above. As noted above, in various embodiments, some of the steps may be performed in a different order than shown, or may be omitted. Additional steps may also be performed.

In the embodiment of Figure 11B, the hub device 110 executing the graphical program may include the hub device 110 providing one or more commands to a respective wireless smart sensor or DAQ device 120, as indicated by 1112 (or multiple different smart sensors). In other words, execution of the program 202 may cause the hub device 110 to provide a command to the respective sensor device 120 via wireless means. The command is preferably one that is recognized by the driver software 220 on the sensor device 120.

In step 1114, the respective wireless DAQ device driver 220 may execute the command. For example, the driver 220 may execute to cause the wireless sensor 120 to perform a single point read. Then, in 1116, the wireless DAQ device may acquire data from an external phenomenon, e.g., may perform the single point read. It should be noted that other commands may also be sent to the wireless DAQ device in addition to read commands, as mentioned above, such as, for example, start, stop, parameter writes, etc. In other words, the execution of the program by the hub device 110 may result in a variety of commands being sent to the wireless sensor 120 to perform a corresponding variety of functions, or to perform a complex function which required multiple commands to be executed by the sensor 120.

After the DAQ device 120 has acquired the data, then in 1118, the DAQ device 120 may send the data to the hub device 110, e.g., through wireless means, such as over the network 104. In other words, the sensor device 120 may provide the acquired data in a wireless fashion to hub device 110. The hub 110 may then send the data to the host computer system 102, as indicated in 1120. The host computer system 102 may display the received data in a GUI, and/or may otherwise process the received data to generate a certain result. In one embodiment, the user constructs a GUI or front panel as part of the process of creating the graphical program, and this GUI code is executed on the computer system 102 to present the GUI on the display of the computer system 102.

In one embodiment, once the hub 110 has received the data, the hub device 110 may then execute the program to analyze the acquired data to generate a certain result, e.g., a Boolean result such as a pass-fail or yes-no. For example, sensor device 120 may be acquiring data from the atmosphere proximate to the sensor to determine the presence of one or more substances, e.g., such as bacterial toxins in a food process plant. The sensor may provide the acquired data to the hub device, and the hub device executing the program may operate to analyze the data to generate a Boolean value (yes or no), indicating whether any of the substances of interest are present. The hub device may then possibly provide this result to computer system 102.

In an alternate embodiment, the hub device 110 simply receives the acquired data from a sensor device and provides the acquired data over the network to the computer system. In this embodiment, the computer system 102 may perform analysis on the data to determine a result from the data. In other words, computer system 102 may analyze the acquired data to determine if any interesting substance is present and then may generate or store an indication of this result, e.g., either by storing the value in memory, generating information on a graphical user interface on the display device to a user, indicating an alarm, providing an email to store the information to a third party, or other processing as a result of this analysis.

As mentioned above, in other embodiments, the hub 110 may, in addition to, or instead of, sending the data (or results based on the data) to the host computer 102, send the data to another system on the network 104, or publish the data to a website.

In one embodiment, prior to sending and/or executing the program, the user may use the configuration utility to determine and/or modify the status of the hub 110 and/or the wireless DAQ devices 120. For example, the user may issue a command through the configuration utility 642 to perform a discover process, whereby available resources, e.g., hubs 110 and/or available wireless DAQ devices 120 for particular hubs, may be discovered. The discovered resources may be displayed by the configuration utility 642. The user may then configure one or more of the resources as desired to facilitate performance of the data acquisition task implemented by the program 202.

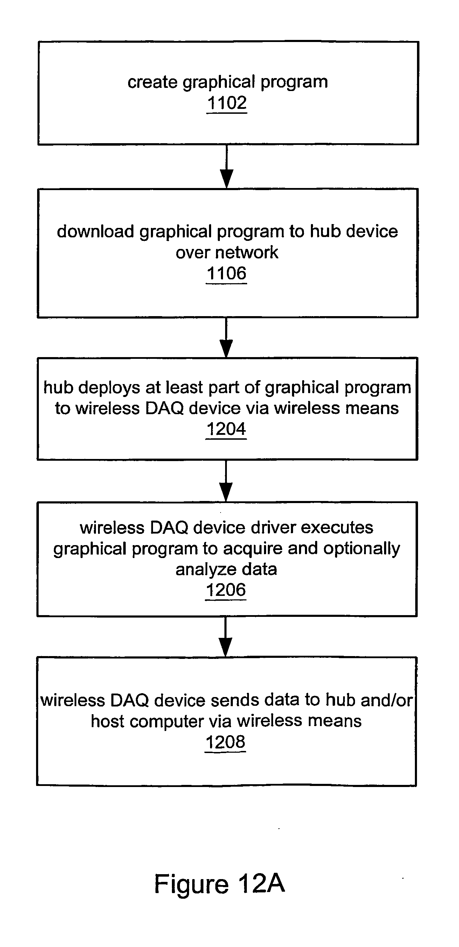

### Figure 12A - Alternative Method for Executing a Graphical Program

In another embodiment, as shown in Figure 12A, the sensor device 120 includes a processor and memory medium for executing programs deployed from the hub device 110. In this method, operation is similar to Figure 11A, except that the hub 110 deploys at least a portion or possibly all of the received program from computer system 102 onto sensor device 120 (or multiple sensor devices 120) for execution. In other words, after the graphical program is created in 1102, in 1106 the host computer 102 downloads the program to the hub 110 over the network 104. Then, in 1204 the hub 110 deploys at least a portion of the program to the wireless sensor 120 via wireless means.

The sensor device 120 may then execute the program to acquire data and may optionally analyze the acquired data to generate a result, as indicated in 1206. Thus, if the sensor is acquiring data to detect the presence of a substance or the occurrence of a condition, the sensor may acquire the data, immediately perform processing on the acquired data, and generate a result such as a Boolean yes-no value. Then, in 1208, the wireless DAQ device 120 may send the data (or results based on the data) to the hub and/or the host computer via wireless means. In one embodiment, the sensor may produce a signal or trigger to generate an indication to a user as to the result, e.g., by sounding an alarm, beeping a beeper, flashing a light, or other mechanism to alert a user that, e.g., the substance or condition has been detected.

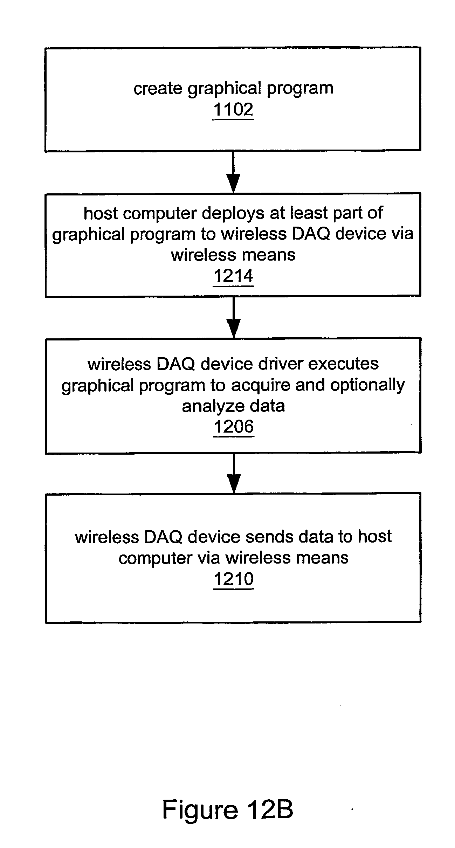

### Figure 12B - Alternative Method for Executing a Graphical Program

Figure 12B is a flowchart of yet another embodiment of a method for executing a graphical program. In the embodiment of Figure 12B, the host computer system 102 communicates directly with the one or more wireless DAQ devices 120. This method corresponds to an embodiment of the system illustrated in Figure 1C, described above, where the hub device 110 is omitted. As mentioned above, in other embodiments, various of the steps presented may be performed in a different order than shown, or may be omitted. Additional steps may also be performed as desired.

As Figure 12B shows, once the program is created in 1102, then the host computer 102 may deploy at least a portion of the graphical program to the wireless DAQ device 120 via wireless means, e.g., via radio, satellite, or cell towers, among others. The wireless DAQ device 120 may then execute the graphical program to acquire and optionally analyze the data, as indicated in 1206, and described above.

Finally, in 1210 the wireless DAQ device 120 may send the data or results based on the data to the host computer via wireless means.

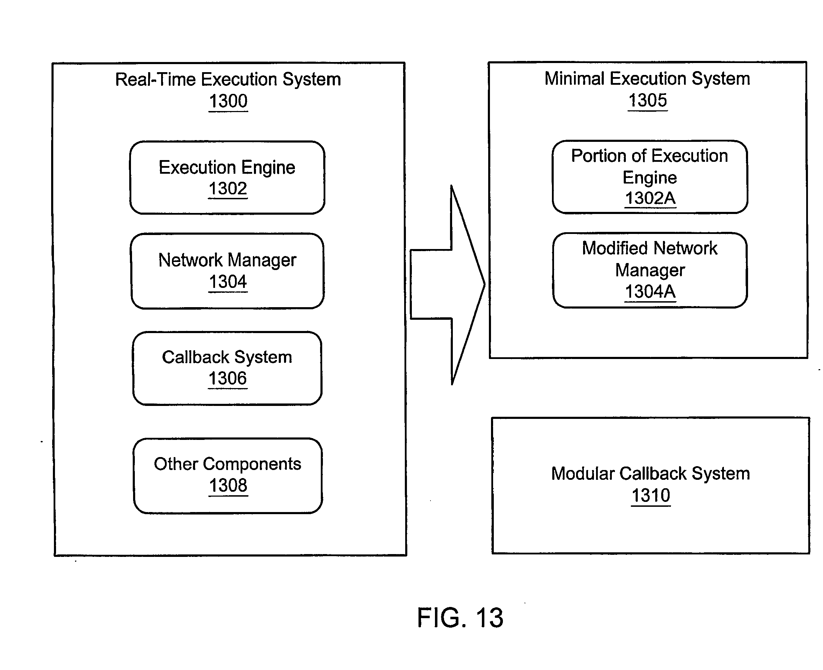

In one embodiment of the invention, the program that is created on the computer system 102 may require use of a program execution engine 203 to execute the program. For example, in one embodiment, the program is a graphical program and requires graphical program execution engine 203 to execute the program. Due to the small footprint of the target device, e.g., hub device 110 and/or smart sensor 120, in one embodiment, the program execution engine is configured in such a way so as to only transmit the minimum amount of a program execution engine actually required by the program that is being executed. Thus, in one embodiment, the program execution engine is partitioned into a (minimal) base execution engine, and a plurality of components for presenting different functionality that can be performed by a program. The base portion of the program execution engine is only capable of executing the very simplest commands. This minimal engine may comprise the smallest set of commands which allows the other components to be executed. Further details of the creation and use of the minimal execution engine are provided below with reference to Figures 13-20.

In an example application of the present system, the hub device 110 operates to execute a radio server program which is operable to discover remote or wireless data acquisition devices that enter into and exit from the wireless communication space that is within the range of the hub device. Thus, periodically, the radio server executing on the hub device may send out a wireless communication signal to query the presence of respective data acquisition devices 120 that are within the wireless communication range of hub device 110. Any present data acquisition devices 120 may respond to the queries to indicate its respective presence. The queries may be performed periodically, e.g., once permitted, once per hour, once per day, or at greater or lesser time frame granularities.

### Figure 13 - Minimal Execution System

Figure 13 illustrates the determination of a reduced or minimal set of functionality needed to execute graphical programs. This minimal set is included in the minimal graphical program execution system 1305 which is installed on the hub device 110 and/or the sensor device 120, either of which may be referred to as the target device, and which operates to execute the (combined) graphical program (via the graphical program flatfile 1707) on the target device 100. In one embodiment, the target device 100 may be comprise an embedded target device, as is well known in the art. The term "minimal" is not used to indicate an absolute smallest size possible, but rather to indicate a substantially minimal size.

Figure 13 compares a minimal graphical program execution system 1305 with an un-optimized (for small memory footprint) graphical program execution system 1300. As Figure 13 shows, the graphical program execution system 1300 may include an execution engine 1302, a network manager 1304, a callback system 1306, and other components 1308. In a typical graphical program execution system, there may be as many as (or more than) 30 components, and so the execution system may be quite large. Such a system may operate under a real-time OS, such as Linux, which has a size of roughly 1.5 MB (mega-bytes). In this typical graphical program execution system, the amount of available memory may be quite large, and hence there is typically no need to reduce the size of the graphical program execution system.

In contrast, the target device may have a limited memory size, e.g., due to power and/or cost constraints. In addition, a real-time OS 210 for the embedded target device 100, such as eCos, may only be 50KB in size, and so the execution engine is preferably scaled down accordingly to run on the embedded device 110 under the embedded real-time OS 210. This may be accomplished by modifying or removing various sub-systems of the execution system 1300 that are not required for basic execution. For example, in one embodiment, the minimal execution system may include only a portion of the execution engine 1302A, as shown, along with a substantially modified network manager 1304A. Other components may be omitted altogether. Thus, a minimal execution system 1305 may be generated with greatly reduced size, and somewhat reduced functionality in order to fit on the embedded target device 100. The minimal execution system 1305 may be the absolute smallest executable execution system 1305, or simply a reduced version of the execution system 1305 including a core set of functionality.

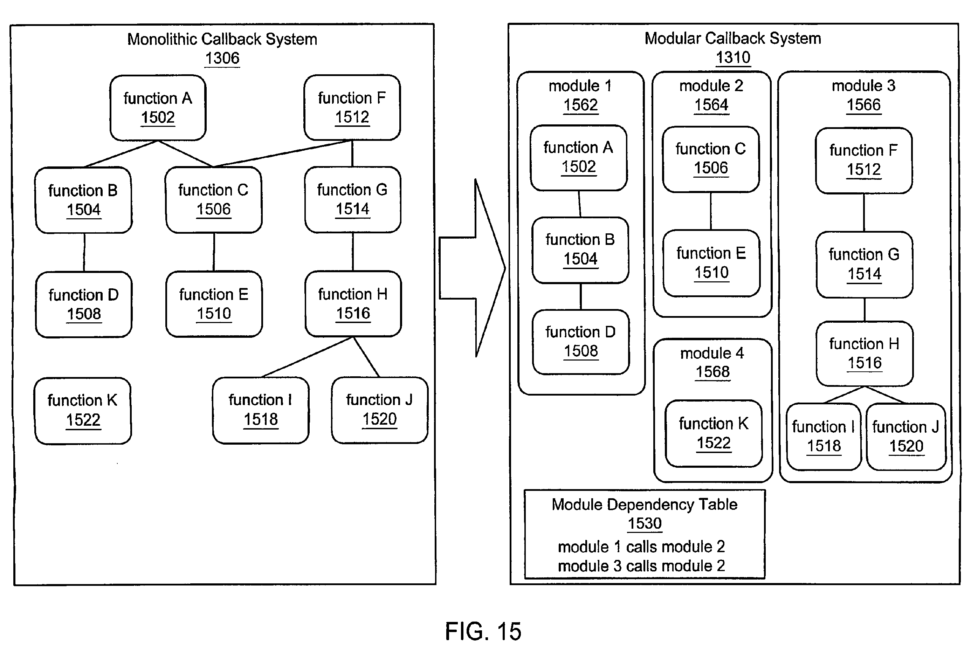

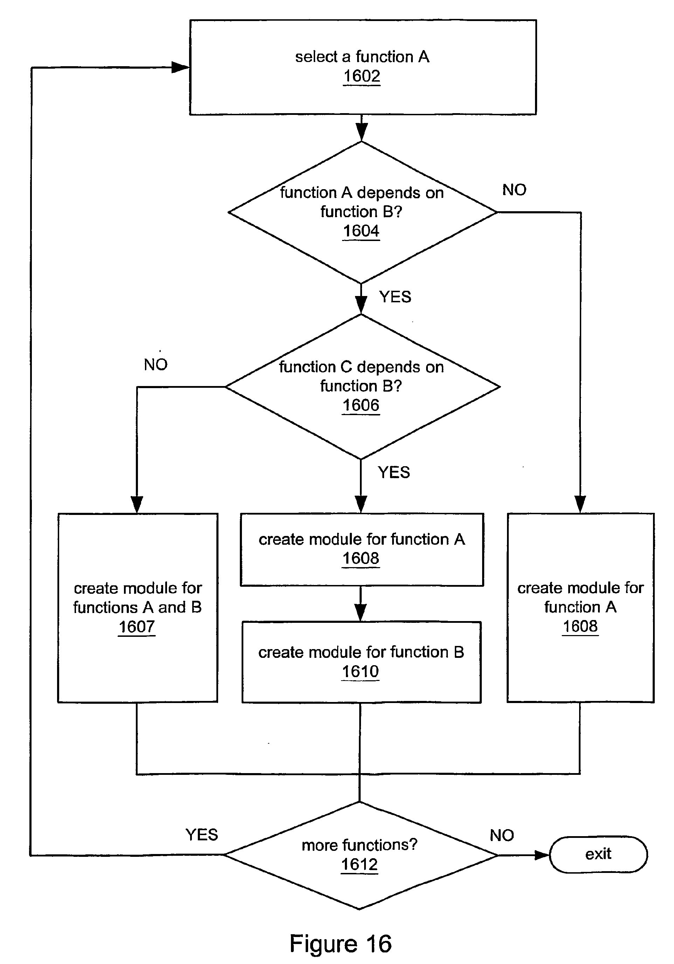

As Figure 13 also shows, in one embodiment, the callback system 1306 may be omitted from the minimal execution system 1305. Instead, the callback system 1306 may be replaced with a componentized or modular callback system 1310 which is stored on the host computer 102, and which may be transferred in part to the target device 100 depending on the needs of the particular graphical program. The componentization of the callback system 1306 is described below with reference to Figures 15 and 16.

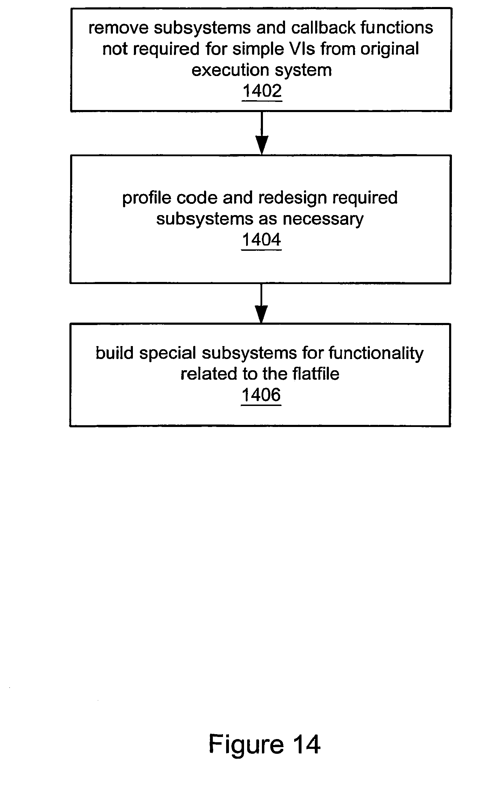

### Figure 14 - Method of Creating a Minimal Graphical Program Execution System

Figure 14 flowcharts one embodiment of a method for creating a minimal graphical program execution system, as described above with reference to Figure 13. It is noted that in various embodiments, one or more of the steps may be performed in a different order than shown, or may be omitted. Additional steps may also be performed as desired.

As Figure 14 shows, in 1402, the original graphical program execution system 1300, as described above in Figure 13, may be analyzed and pared down to the minimum set of functionality required to execute an extremely simple VI, e.g., a two integer addition (1+1 = 2) or a set of simple VIs. In one embodiment, this may include removing such subsystems as the web server, XML support, and the callback table. Then, all the functions that are named in the callback table (which are candidates for modularization and aren't required for the simple VIs) may be removed. Finally, a code coverage test may be perform in order to find and remove the functions that were not called in executing the simple VI (or a set of simple VIs). The resulting code comprises an initial version of the minimal execution engine 1305.

Then, in 1404, the resulting code may be profiled to determined how much code memory and RAM memory it occupies, and to decide which of the remaining subsystems are too large and should be redesigned. For example, for the system described above based on the ARM processor, a target memory footprint of 50K may require trimming those subsystems that are required and are too large in the original execution system. As an example, the network manager and type system may need to be redesigned if they were implemented with too large buffers in the original execution system.

Finally, in 1406, if the original execution system VI linker does not fit the design, special subsystems, e.g., VI2OBJ and FLATFILE systems, may be built. In other words, components for converting VIs to object files (VI2OBJ) and for generating the modules for the flatfile (FLATFILE) may be created. Further information regarding the generation of object files for VIs is provided below in the section titled VI Object Files.

Thus, in one embodiment, a minimal execution engine 1305 may be constructed by removing all but the minimum functionality required to execute a VI (graphical program), including most or all of the callback system 1306, leaving the portion of the execution engine 1302A and a modified network manager 1304A, as described above. Such a minimal execution system 1305 may then be suitable for loading and executing on an embedded device 110. In one embodiment, the minimal execution system may comprise an execution system virtual machine.

It should be noted that the process described above with reference to Figures 13 and 14 may also be applied to operating systems, such as a real-time operating system (OS). In other words, an operating system may be optimized, modularized, and/or modified to minimize the footprint on the target device 100. For example, the operating system may be analyzed to determine a minimal kernel or core functionality necessary for the OS to operate. For example, in one embodiment, the minimum functionality may include a simple Basic I/O Service (BIOS) and/or a minimum communication service, such as a TCP/IP service, as is well known in the art. As another example, the minimum functionality may include a simple downloading capability or functionality, e.g., a download protocol. Thus, in various embodiments, the minimum functionality may include one or more of: a simple BIOS, a minimum network communications protocol (e.g., TCP/IP), and/or a minimum download capability. In another embodiment, the minimum functionality may include a hardware and/or software checking capability. Other functions or services of the OS, such as I/O, memory management (e.g., trash collection, etc.) etc., may be modularized or partitioned such that subsets of the functions or services needed for a particular application or device may be determined and transmitted as needed. Thus, in one embodiment, a distributed, "on-demand" OS may be created which includes the kernel (or minimum functionality), and one or more transferable OS modules which provide additional OS functionality in a modular fashion. Thus, the minimum functionality may facilitate subsequent downloading of support libraries and executing kernel components, i.e., in one embodiment, the minimum functionality may be just enough to allow the device to download further basic OS capabilities, including portions of the kernel and/or the BIOS. In another embodiment, these further basic OS capabilities may be included with an application, as described in detail below.

Thus, in one embodiment, the OS kernel or core functionality may reside on the target device 100, and may be executable to perform basic OS functionality on the device. Then, based on analysis of the application (e.g., a graphical program and/or the desired task, and/or the target device), one or more OS modules may be selected to provide particular needed services. These OS modules may then be transmitted to the target device 100 and installed (e.g., by the kernel or other loader program) to augment the basic OS functionality provided by the kernel, after which the OS (now extended) may be operable to provide the additional OS services or functionality.

In various embodiments, the one or more OS modules may be transmitted alone, or along with or as part of the target application. For example, in one embodiment, the one or more OS modules may be included in a flatfile 1707 (or other structure or file) along with modules from the graphical program, and possibly also with modules (components) of the modular callback system 1310.

### Figure 15 - Componentization of the Graphical Program Callback System

Figure 15 illustrates the process of componentizing a monolithic graphical program callback system 1306 to generate the modular graphical program callback system 1310, according to one embodiment. It should be noted that the callback system of Figure 15 is a highly simplified model which is intended only to illustrate the process, and is not meant to represent an actual callback system.

As Figure 15 shows, the monolithic graphical program callback system 1306 includes a plurality of functions A-K (1502-1522) with varying dependencies. In many prior systems, the functions are arbitrarily stored in many different files, which generally accumulate over time as the function library is developed. Thus, locating functions for linking and execution may be difficult and expensive, since functional dependencies may span numerous files in a substantially haphazard manner. As a result, when linking files for a particular application (graphical program), many unnecessary functions may be included due to the fact that they happened to be located in the same files as need functions, thus, the resulting memory footprint of the executable may be unnecessarily large.

The approach used herein to modularize the functions is to analyze the functional dependencies of the functions, and to group functions which operate relatively independently from other functions as a module. For example, as Figure 15 shows, function A 1502 calls function B 1504 and function C 1506. Function B 1504 calls function D 1508, and function C 1506 calls function E. Thus, function A 1502 has a dependency on function B 1504, function C 1506, function D 1508, and function E 1510.

Similarly, function F 1512 depends on function G 1514, function H 1516, function I 1518 and function J 1520, as well as function C 1506 (and its child function E 1510). Note that function C 1506 (and its child function E 1510) is called by both function A 1502 and function F 1512. This dependency overlap may be resolved by grouping any function (with its children) which is called by multiple other functions as a separate module. Thus, a first module, module 1 1562, may include function A 1502, function B 1504, and function D 1508, as indicated in the modular callback system 203. Module 2 1564 includes function C 1506 and function D 1508, as shown. Module 3 1566 includes function F 1512, function G 1514, function H 1516, function I 1518 and function J 1520. Note that module 1 1562 and module 3 1566 both depend on module 2 1564 (since both function A 1502 and function F 1512 call function C 1506). This module dependency relationship may be maintained in a module dependency table 1530 or its equivalent. As Figure 15 also shows, function K is independent of any other functions, and so has its own module, module 4 1568.

In one embodiment, each module may be stored in a separate file, greatly easing the task of a dependency checker when selecting modules/files needed by the graphical program 202, i.e., for inclusion in the flatfile 11507. A method for performing this componentization is described below with reference to Figure 16.

### Figure 16 - Method for Componentizing a Graphical Program Execution System

Figure 16 flowcharts one embodiment of a method for componentizing a graphical program execution system, such as, for example, LabVIEW RT. More specifically, as described above with reference to Figure 15, the method componentizes or modularizes a set of functions (e.g., the function library) of the execution system, also referred to as the callback system of the execution system, by grouping functions in files or modules based on dependencies.

For example, in one embodiment, the original source code of the callback system includes a set of files that each contains functions that may call other functions, that may call other functions, etc., that belong to other files. If a function's dependencies extend into several files, it may be difficult or impossible for a dependency checker to identify and retrieve the function. To facilitate a dependency checker being able to select from the callback system source code only those functions that are needed by a particular application, an attempt may be made to place each function with it's dependencies into a single file. This "complete" function file (e.g., with *.cpp extension) may comprise a module. Thus, componentization of the graphical program execution engine may include the creation of modules, or *.cpp files, that completely (or almost completely) describe a function.

The following describes one approach for performing this componentization, using functions A, B, and C for illustrative purposes. It is noted that in various embodiments, one or more of the steps may be performed in a different order than shown, or may be omitted. Additional steps may also be performed as desired.

As Figure 16 shows, each function may be analyzed with respect to its functional dependencies to determine whether to place the function in a separate module or in a module with another function. For example:

In 1602, a next function, e.g., function A, may be selected, such as from the callback system of the graphical program execution engine. Then, a determination may be made as to whether function A has dependencies, i.e., calls a function B, as indicated in 1604. If function A has no dependencies, i.e., does not call function B, then a module or file may be created for function A, as shown in 1608.

If in 1604 function A does call function B, then in 1606 a determination may be made as to whether function B is also called by another function, e.g., function C. In other words, the method may check to see if any other function has a dependency on function B. If no other function calls function B, then in 1607 a module or file may be created containing both function A and function B.

If in 1606 it is determined that function B is called by function C, then separate modules or files may be created for function A and function B, respectively. Said another way, if function B may be legitimately included in multiple modules (or files), then function B may be given its own module or file. It should be noted that in various embodiments, dependencies between modules may be stored either in the modules themselves or in some type of module dependency table or its equivalent.

Finally, in 1612, a determination may be made as to whether there are additional functions to analyze. If there are no more functions in the callback system, then the method may terminate or exit, as shown. Otherwise, the method may continue, selecting the next function in the callback system to analyze, as shown in 1602, and described above.

Thus, if function A calls function B, and function B is only called by function A, then a module or file containing function A's definition may also contain function B's definition. Under this scenario, the dependency checker will know that function A and function B are interrelated and part of the same file. If function A calls function B, and function B is also called by function C, then function A's module or file will not contain function B in its definition file, and so function B's definition may be included in a separate file (or module). And so, by using the method above, the functions of a callback system in a graphical program execution engine may be modularized to allow the dependency checker to find and retrieve only those modules or files that are needed by the application, where the modules or files are organized to minimize the number of unnecessary functions included in the graphical program flatfile.

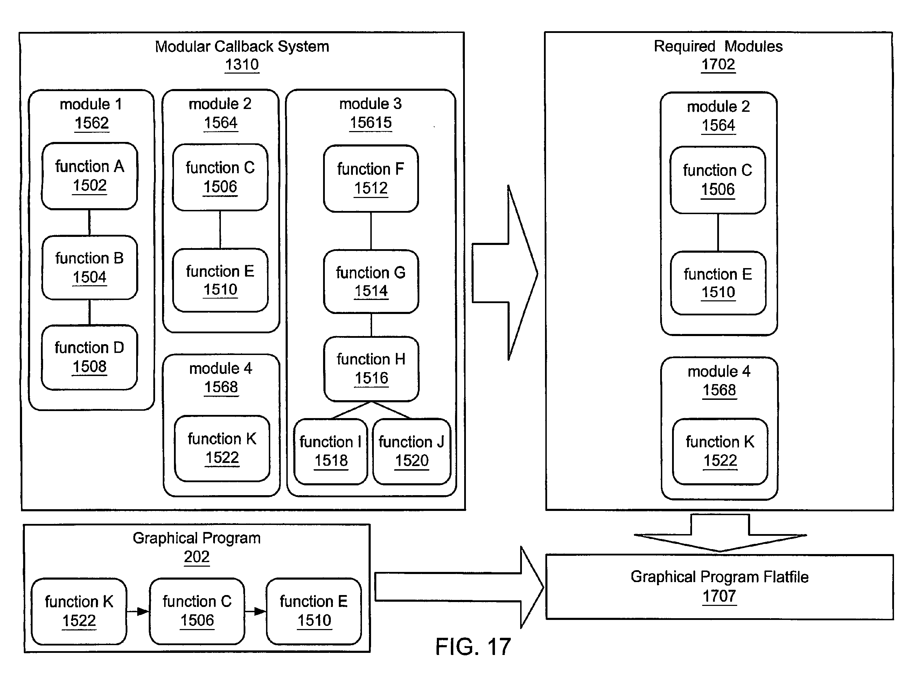

### Figure 17 - Generation of the Graphical Program Flatfile

Figure 17 graphically illustrates the process of generating a graphical program flatfile 1707 from graphical program 202 and the modular callback system 1310. As Figure 17 shows, a dependency checker program or process may analyze the graphical program 202 with respect to the modular callback system 1310 to determine required modules 1702. For example, in the embodiment shown, in the (extremely simple) graphical program 202, function K 1522 is executed, then function C 1506 (which calls function E 1510 implicitly) is executed. Finally function E 1510 is executed (explicitly). Thus, as is well known in the art, the graphical program not only indicates the functions called, but the sequence of execution, as well.

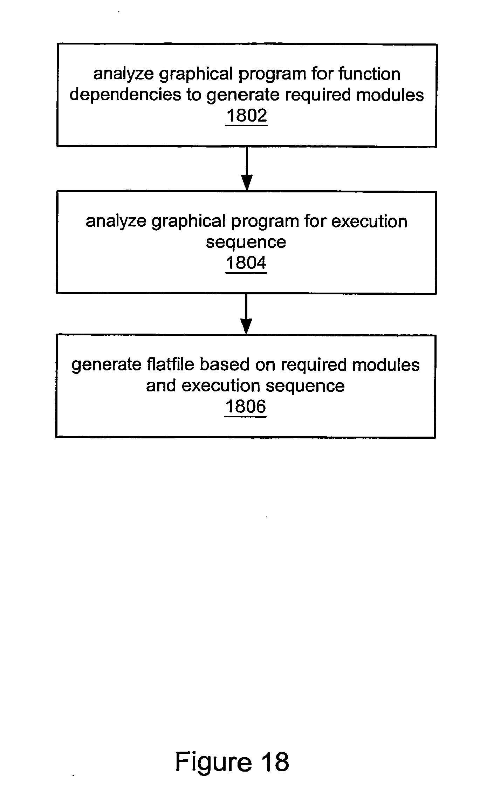

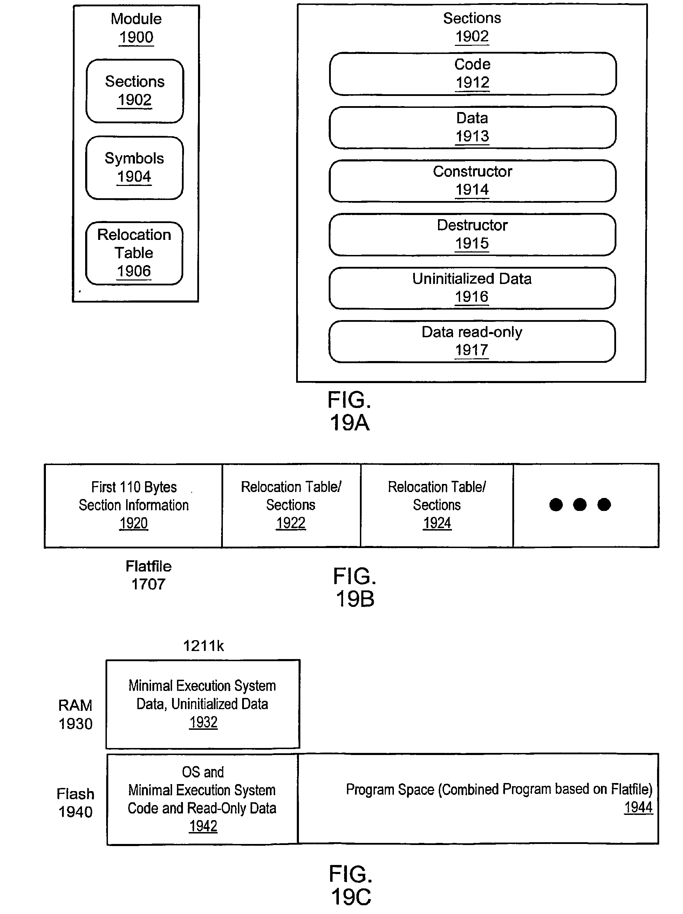

The dependency checker may thus may determine that module 2 1564 and module 4 1568 are required by the graphical program. This information may then be used in conjunction with execution sequence information from the graphical program 202 to generate the flatfile, as indicated in Figure 18. Further details of the flat file are provided below with reference to Figures 18 and 19A-19C.

### VI Object Files

In the process of generating the flatfile for an application program, one or more object files may be produced, e.g., via a utility such as VI2OBJ or its equivalent. The reasoning behind this approach is due to the storage limitations of many embedded devices. For example, loading an entire VI to the target device 100 may require more RAM than is available on the device, and execution of VIs directly from flash may not be possible because there is not enough RAM memory to copy these VIs into RAM and execute from there. It should be noted that as used herein, the term "program" may refer to the original source code of a program (e.g., the graphical diagram and underlying code, or text source code, such as C code), to object code generated from the source code, or to executable machine code generated from the source or object code.

However, because the callback system modules (generated from C/C++ code), described above, must be loaded onto the target device 100, it is natural to implement a common mechanism for loading VIs and modules. Thus, a VI2OBJ linker/loader may be developed based on the idea that VIs can be saved, not in their native format, but as object files, such that an ordinary C linker may be used to process them - i.e. to transform them into shared objects that can be loaded at runtime into the target device 100. This approach may make generation of executables from VIs easy and straightforward when space is limited. VI2OBJ or its equivalent is a mechanism to transform a VI (ex: add_int.vi) into an object file (ex: add_int.o).

To describe the mechanism involved in transforming a VI to an object file, the general structure of a VI should be considered. Omitting irrelevant information, the six major components are:
1. Compiled code - executable binary code of a VI;
2. Data space - stores all the data that is required by the VI to run;
3. Data space type map - describes the data stored in the data space;
4. Connector panel - describes the inputs & outputs of a VI;
5. Front panel heap - hosts the controls, indicator & cosmetics etc.; and
6. Block diagram heap - hosts the nodes & wires that make up the block diagram.

Another important piece of information is the linkinfo, which describes connections made from a VI to various entities, e.g., subVIs, external functions etc.

Now, the above listed components may be reshaped into an object file based on the following considerations:
1. The generated object file may be processed by an ordinary C linker (the VI may be linked to other support modules and eventually used to generate the flatfile).
2. It may be desirable to use the original execution mechanism of VIs on the target device 100.
3. The overhead induced by the new loading mechanism should be minimized.
4. Additional processing required after the VI is loaded by target device 100, up to the point where it is ready to run, should be minimized.
5. The object file size should be minimized.

To minimize the object file size the front panel heap and the block diagram heap may be omitted from the VI, because they are not needed on the target device 100 at run time, i.e., they are only used on the host computer side at edit time. As is well known in the art, an object file is substantially a file comprising of blocks of information (e.g., code, data, etc.), symbol information, and relocation information. In one embodiment, the steps taken to create an object file from a VI may include:
1. placing the compiled code resulting from the VI into the section code of the object file, extracting the symbol information attached to the VI code, and adding relocation information for local and external function calls.
2. creating a data section for the object file containing initialized data, e.g., data space type map block of the VI, default data space, connector panel and VI InstrHandle structure (enabling some of the initialization for a VI on the host side), etc. Additionally, symbol information may be added to facilitate retrieval and use of information stored in this section.
3. creating a .bss section for un-initialized data and storing related symbol information there.
4. extracting patch information from the linkinfo block and storing this info in a data section (e.g., named linkdata). This information may include a set of symbol and relocations entries. The data section may be used to store links from the VI to other subVIs or external modules.
5. finally, calls may be generated for InitVI and UnInitVI functions (and stored in two special sections: .ctors and .dtors, of the object file). These functions may be responsible for VI initialization and disposal on the target device side.

Performing the steps described above may generate an object file that contains all the information needed by a VI to run, and that also includes symbol and relocation information used to connect this VI with other VIs or modules.

### Figure 18 - Method for Generating the Graphical Program Flatfile

Figure 18 is a high-level flowchart of one embodiment of a method for generating the graphical program flatfile 1707, as illustrated in Figure 17. As mentioned above, in various embodiments, one or more of the steps may be performed in a different order than shown, or may be omitted. Additional steps may also be performed as desired.

As Figure 18 shows, in 1802, a graphical program 202 may be analyzed with respect to function dependencies to generate a list or collection of required modules. In other words, a dependency checker residing on the host computer system 102 may determine the functions used in the graphical program, then select modules from the modularized callback system 1310 which contain those functions to generate required modules 1702.

After (or before or during) the required modules 1702 are determined, the graphical program 202 may be analyzed to determine an execution sequence or order of the functions called by the program (or by other functions in the program 202). In other words, the program flow for the graphical program 202 may be determined.

Finally, the flatfile 1707 may be generated based on the required modules 1702 and the execution sequence for the program. In one embodiment, the flatfile 1707 may be generated by including the required modules 1702 in the flatfile 1707 along with sequencing information and/or module dependency information. An exemplary structure and format of the generated flatfile 1707 is presented below with reference to Figures 19A-19C.

In one embodiment, the flatfile 1707 may be generated from an object file and a symbol map of the target executable (the graphical program). As an example, assume that the object file is named add_int.o (for adding two integers) and the flatfile name, will be add_int.flat.

First, a symbol map (named mb.sym) may be generated from the graphical program, e.g., by using a special tool, e.g., a symdump tool. The symbol map contains all the global symbols of the graphical program along with the sections where they belong, and their addresses relative to the beginning of the section. Section names of the graphical program may then be extracted (e.g., from mb.sym), and numbered, e.g., beginning with one. Section names of add_int.o may then be extracted and numbered, e.g., beginning with 100. Thus, symbol lookup may be done at the time of the flatfile creation.

Then, symbols may be extracted from mb.sym and add_int.o. Relocation information may be extracted from add_int.o. Relocation information in an object file may include the address where the relocation is needed and the symbol name for the relocation. In one embodiment, the relocation information in a flatfile may comprise tuples (clusters, structures, etc.) of {[address where the relocation is needed (uInt32)] , [the target section (uint16)] , [the target address relative to the start of the start section]}. Further information regarding relocation is provided below.

For every relocation in the add_int.o, the symbol name may be searched for in mb.sym and add_int.o, and, if the symbol is not found, then an error message may be generated and the method terminated. If the symbol is found, the relocation may be written to the flatfile, i.e., to add_int.flat.

Finally, each section's content may be written to the flatfile. In one embodiment writes to the flatfile 1707 may be made in accordance with the formats for relocation, etc., for a flatfile, described below.

It should be noted that in a preferred embodiment, unlike DLLs (Dynamic Link Libraries), flatfiles are "targeted". In other words, flatfiles are generally built to be loaded by a specified program. Thus, a crash or error may occur if another program tries to load a flatfile that was not built for it. Also, in one embodiment, the version of the symbol map should match the version of the graphical program. This version compliance may be facilitated by using a "build timestamp" in the application and in the mb.sym, so verification of the "version match" is possible.

### Relocation

Relocation refers to writing the code section of an application at a certain memory address and preparing the code for execution. Preparation includes modification of the code according to a relocation table such that at execution time the code is able to access the variables and functions that it needs for its task. Examples of relocation are presented below.

### Relocating Code

A program, at compile time, is set to run at certain memory addresses, say Xtext for the code section and Xdata for the data section. However, when the program is.dynamically load into the target device 100, it is very possible that these addresses are already occupied, or may not even exist on the target device 100. Therefore, the code and data sections of the program may be placed in different memory locations on the target device, say Ytext and Ydata.

For example, if the program contains the following C instruction:
i=0;
and the address of variable i is (Xdata + 100) (an offset of 100, for example, with respect to Xdata) After code compilation, the following assembly line of code may be produced:
mov [Xdata+100], 0
meaning "move the value 0 at address Xdata + 100".
Now assuming that the code section is transferred to the target device 100, and Xdata becomes Ydata, the target device address of variable i is now (Ydata + 100).
The process that corrects the instruction
mov [Xd+100], 0
to
mov [Yd+100], 0
is called relocation. The relocation process uses the Relocation Table to determine the address in the code section for the instruction
(mov [Xd+100], 0).
and how this instruction needs to be changed.

In one embodiment, one or more of the following constraints may apply to the target device:
1. target flash should be large enough to be able to store the flatfile code, constructor, destructor and read-only sections.
2. target RAM should be large enough to store the flatfile data section and also the largest relocation table.

### Relocating Data

The following is an example of relocation in the Data Section (.data). Assume that the program includes the following code sequence:
int i;
int *j=&i;
i is an un-initialized variable, so it may be stored in the un-initialized data (.bss) section. j is a variable that will contain the address of variable i, so after being initialized it may be stored in the data section. Because j will eventually have to contain the address of i, a relocation may be necessary in the data section to the address of j.

### Figures 19A-19C - Structure and Deployment of the Graphical Program Flatfile

Figures 19A-19C illustrate the structure and deployment of the graphical program flatfile 1707, according to one embodiment. Figure 19A illustrates one embodiment of the contents of the modules used to build the flatfile 1707. Figure 19B illustrates the structure of the flatfile 1707, according to one embodiment. Finally, Figure 19C illustrates the deployment of the minimal graphical program execution system 1305 and the constructed combined program 202A.

As Figure 19A shows, in one embodiment, a module 1900, as referred to above with reference to Figures 14 and 15, may include three components: a sections component 1902, a symbols component 1904, and a relocation table 1906. In one embodiment, the module is a piece of C or C++ code contained in one or more C or C++ files. Every module may be compiled into an object file which contains the executable code and the data generated by the compiler for a specific module, along with symbolic and relocation information for that module, and other information, such as debug info, comments, etc.

The sections component 1902 may include six sections which represent various aspects of the module 1900, as shown in Figure 19A. More specifically, the sections may include a code section 1912 which is the program code for the module, a data section 1913, a constructor 1914 for the module, a destructor 1915 for the module, a un-initialized data section 1916, and a data read-only section 1917 (i.e., for constants). A section may comprise a range of addresses with no gaps; all data in those addresses may be treated the same for some particular purpose. The symbols component 1904 includes the variables and function names for the module. A symbol is a name associated with a given address in a given section. The symbolic and relocation information from the object file of the graphical program can be used to determine the dependency relation between modules.

One characteristic of the object file is that it can be relocated, meaning that with appropriate processing, object file sections can by stored and executed at any memory address. As described in detail above, relocation is the process that makes an object file able to run at a given address. The information (table) that the relocation process uses is referred to as relocation information (or the relocation table) and is preferably included in the flatfile 1707. Thus, the relocation table 1906, also referred to as an address table, provides the relative addresses for the symbols (variables and functions) with respect to the program on the host computer 102. This relocation information may be used by the target device to construct the combined program 202A, adding an address offset to the addresses in the relocation table 1906 to generate correct locations for the symbols in the context of the target device 100.

Thus, once the graphical program has been compiled to an object file, the object file may contain sections such as:
SectionA
   Relocation information for SectionA
   Symbol information for SectionA
   Debug information for SectionA
SectionB
   Relocation information for SectionB
   Symbol information for SectionB
   Debug information for SectionB
SectionC
   Relocation information for SectionC
   Symbol information for SectionC
   Debug information for SectionC
etc. in no specific section order.
The information in each module 1900 may be included in the flatfile 1707, as shown in Figure 19B.

As Figure 19B shows, the flatfile 1707 may include an initial segment 1920 (reading left to right) which includes information regarding the module information in the flatfile 1707. In one embodiment, this section may be about 100 bytes in size, and may include such information as the number of sections in the flatfile, the size of each section in bytes, and the type of each section, e.g., code 1912, data 1913, etc.

After this initial section information segment 1920, one or more module segments, referred to as flatobjects, may be included, as Figure 19B shows. In one embodiment, each module segment may include the module information shown in Figure 19A, i.e., each module segment may include relocation table 1906 and sections 1902 for a respective module 1900.

Figure 19C illustrates the deployment of the minimal execution system 1305 and the combined program 202A on the target device 100. As Figure 19C shows, the minimal execution system 1305 may be divided between RAM 1930 and flash memory 1940 on the target device 100. In the embodiment shown, the RAM 1930 is of size 128k and stores data and un-initialized data for the minimal execution system 1305. As Figure 19C also shows, in this embodiment, 128k of the flash memory 1942 is used to store the real-time OS (e.g., eCos) and the code and read-only data for the minimal execution system 1305. The remainder of the flash memory 1940 may be used to store the combined program 202A which may be constructed based on the flatfile 1707. It should be noted that the RAM 1930 may also be used to store data during execution of the combined program 202A.

Thus, the flatfile 1707 may include module information for functions of the graphical program 202 and for functions included from the modular callback system. In other words, the functions (with variables) for the graphical program 202 have been combined with the execution system functions required to execute those graphical program functions. This module information also includes relative address information for re-locating the functions in the memory space of the target device 100. The flatfile 1707 may be transmitted to the target device 100 where a flatfile loader may execute to receive the flatfile 1707 and construct the combined program 202A. Further details of the process of constructing the combined program 202A from the flatfile are provided below with reference to Figure 12.

### Detailed Structure of Flatfile

The following describes one embodiment of flatfile structure or format in more detail. It should be noted that the following format is exemplary and it only intended for illustration purposes, i.e., is not intended to limit the structure or format of the flatfile to any particular design.
Flatfile:
sec_nr (int32) Number of sections;
sec_desc[sec_nr] - An array of sec_nr section descriptors. See the format of sec_desc below;
sec_content[sec_nr] - An array of sec_nr with section contents. See the format of sec_content below;
sec_desc:
sec_size (uInt32) - the size of the section data;
sec_type (uInt32) - type of the section. A combination of FO_SEC_READONLY, FO_SEC_HAS_CONTENT, FO_SEC_IS_CTOR_TABLE, FO_SEC_IS_DTOR_TABLE;
number (uInt32) - a unique number for every section;
sec_content:
rel_desc - relocations for this section. See bellow for rel_desc structure;
section_data - the raw data of the section;
rel_desc:
rel_nr (uInt32) - number of relocation in this relocation descriptor;
rel_data[rel_nr] - an array of rel_nr relocations data - See bellow for the rel_data structure;
rel_data:
addr (uInt32) - the relocation address, relative to current section start;
target_sec (uInt16) - the section where the relocation should point;
target_addr (uInt32) - the address relative to target section address where the relocation should point;
rel_type (uInt16) - the type of the relocation.

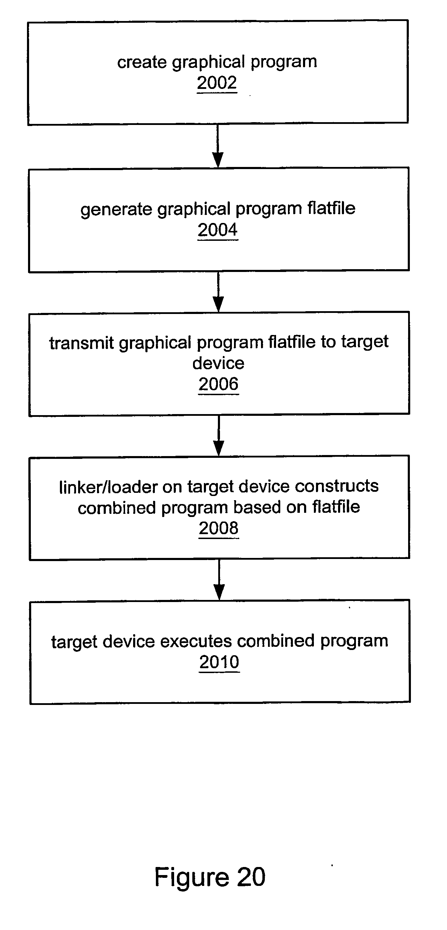

### Figure 20 - Method For Deploying and Executing a Graphical Program

Figure 20 flowcharts one embodiment of a method for creating, deploying, and executing a graphical program on a target device 100. More specifically, a method is described for creation and deployment of programs on the target device 100, such as hub device 110 and/or sensor device 120, described above. As noted above, in one embodiment, the target device 100 may be an embedded device. It is noted that in various embodiments, some of the steps may be performed in a different order than shown, or may be omitted. Additional steps may also be performed. As shown, this method may operate as follows.

In one embodiment, the user first may create a program that is operable to execute within the target device, as indicated in 2002. In creating the program, the user may be aware of the one or more sensor devices 120 which will be acquiring data in the system. The user may include code in the program which is operable to execute on the target device, and which operates to provide instructions to one or more of sensor devices 120 to direct sensor devices 120 to acquire data at certain times or based on certain detected events. In one embodiment, the user may create a graphical program on computer system 102. As noted above, a graphical program may comprise graphical code, i.e., two or more interconnected nodes or icons which visually represent operation of the program. In creating the program, the user may place icons within the graphical program representing each of the respective sensor devices 120 that are being used. The user may also include graphical code in the program which operates to provide instructions to the respective sensor device icons, i.e., by connecting other graphical nodes to the sensor device icons in the graphical program. Thus, the graphical program may be created or assembled by the user arranging on a display a plurality of nodes or icons and then interconnecting the nodes to create the graphical program. In response to the user assembling the graphical program, data structures may be created and stored which represent the graphical program. The nodes may be interconnected in one or more of a data flow, control flow, or execution flow format. The graphical program may thus comprise a plurality of interconnected nodes or icons which visually indicates the functionality of the program. As noted above, the graphical program may comprise a block diagram and may also optionally include a user interface portion or front panel portion. Where the graphical program includes a user interface portion, the user may assemble the user interface on the display. As one example, the user may use the LabVIEW graphical programming development environment to create the graphical program.

As described below, the block diagram may be intended to execute on the target device 100. The user interface code may remain on the host computer 102 and may execute on the host computer 102 to present the user interface on the host computer 102 during execution of the block diagram on the target device 100. The user may interact with the user interface presented on the host computer 102 to provide input to and/or view output from the block diagram executing on the target device 100.

In an alternate embodiment, the graphical program may be created in step 2002 by the user creating or specifying a prototype, followed by automatic or programmatic creation of the graphical program from the prototype. This functionality is described in U.S. Patent Application Serial No. 09/587,6102 titled "System and Method for Automatically Generating a Graphical Program to Perform an Image Processing Algorithm", which is hereby in its entirety as though fully and completely set forth herein. The graphical program may be created in other manners, either by the user or programmatically, as desired. The graphical program may implement a measurement function that is desired to be performed by the instrument. For example, in an embodiment where the instrument is an image acquisition device (e.g., a smart camera), the graphical program may implement an image processing function.

Once the program has been completed, then in step 2004, the graphical program flatfile may be generated, as described above with reference to Figure 18. One embodiment of this is described in detail below in the section Example Process. In one embodiment, where the graphical program includes a block diagram and a user interface, only the block diagram portion may be used in generating the flatfile. The user interface may remain as code that executes on the host computer 102.

Then, in 2006, the flatfile may be transmitted to the target device 100, e.g., over a network (or other transmission means). In other words, the user may cause the computer system to send the flatfile 1707 over the network 104 (or other communication medium) to the target device 100.

The target device 100 may thus receive the flatfile 1707, and a loader/linker program on the target device 100 may construct the combined program 202A based on the received flatfile 1707, as indicated in 2008. Further details of one embodiment of this process are provided below in the Dynamic Linking section and the Example Process section.

Finally, as shown in 2010, the target device 100, e.g., the minimal execution system 1305 on the target device 100, may execute the combined program 202A.

In one embodiment, the target device 100 may send output data (e.g., acquired data or execution results) to the host computer 102. The data may be transmitted to the computer 102 over the network 104, e.g., through wired or wireless means. The target device 100 may send the output data through one or more intermediate devices, such as a hub device 108. The host computer system 102 may display the received data in a GUI, and/or may otherwise process the received data to generate a certain result. In one embodiment, the user constructs a GUI or front panel as part of the process of creating the graphical program, and this GUI code is executed on the computer system 102 to present the GUI on the display of the computer system 102.

In one embodiment, in executing the program received from the computer system, the target device 100 may be directed by the program to provide certain commands to respective ones of sensor devices 120 to cause the sensor devices to acquire data and provide this acquired data to the target device. Examples of the types of commands that may be implemented by sensor devices 120 include, but are not limited to, single/multiple point read, writes (e.g., for configuration) start, and stop, among others. In one embodiment, prior to sending the program to the target device 100, the minimal execution system 1305 may be deployed to the target device 100. In another embodiment, the target device 100 may already have the execution system 1305 installed.

Thus, the target device 100 executes the program received from the computer system 102, e.g., via the execution system 1305. In one embodiment, the target device 100 may execute the program upon reception of the program from the host computer 102. In another embodiment, after the program has been transferred to the target device 100, the user may send a command to the target device 100 over the network 104 invoking execution of the program by the target device 100. In an exemplary embodiment, the execution of the program results in some data being acquired or generated. These data may then be sent (e.g., over the network 104 or other communication medium) to the host computer system 102, e.g., for display and/or analysis. In other embodiments, the acquired data may be sent to other systems. For example, in one embodiment, the target device 100 may use web server program 1404 to publish the acquired data to a website, where a system with a web browser may then access the data. In another embodiment, the target device may send the data to one or more other systems coupled to the network 104 (e.g., the Internet). Thus, the target device may send the acquired data to any networked devices, as desired.

### Dynamic Linking of Flatfile to the Target:

As described above, in a preferred embodiment, the flatfile 1707 may comprise a sequence of sections and relocation tables. The sections can be code, data, constructors, etc.
When the flatfile is constructed on the host computer, the code in its sections is relative, meaning that the instructions described in this code do not have real target addresses for the variables but rather some generic addresses, e.g., with respect to the beginning of the program.

For example, the program may include an instruction:
Move to variable I at address 10, the value 0 (I = 0)

Now, as mentioned above in 2006, the flatfile may be transmitted to the target device, say, for example, in chunks of 4kbytes. The very first transfer contains the initial 100 bytes 1920 that give information regarding the total number of sections, their type, and size, and the relocation tables that come with them, as described above with reference to Figure 19B. Based on this information memory on the target device 100 may be reserved to accommodate these sections.

Now, the code:
Move to variable I at address 10, the value 0 (I = 0)
arrives at the Target. Based on the relocation table, it may be determined that the real target address of variable I is not 10 but rather 500 offset + 10 = 510 because in the datav section of the target RAM all program variables are addressed with relative to address 500.

So at this time, when the flatfile is moved into the target device 100 the call to

Move to variable I at address 510, the value 0 (I = 0)
has been corrected. In other words, the offset (500) has been added to the address. In one embodiment, the call may not be executed immediately, but rather may be stored or written in a code section of the flash location 1940.

In one embodiment, after the entire flatfile has been transmitted to the target and processed, the constructed combined program may be executed. In another embodiment, the execution of the constructed combined program may occur as the flatfile is streamed to the target device 100, as described below.

### Example Process

The following is a simple example of one embodiment of the above described processes. In this example, the user creates a VI on the host computer 102, named Delay.vi, and wishes to run this VI on the target device 100.

On the host computer 102, the VI is transformed into an object file named Delay.o. The modules required for running the VI are determined by a dependency checker executing on the host computer 102, producing the following list (for example):
uClibc/memmove.o (from directory uClibc take file memmove.o)
cookie/mbCookie.o
occur/mbOccur.o
uClibc/memcpy.o

So at this point, the application VIs are converted into object files, and the required modules (that are also compiled into object files at this point) from the modular callback system 1310 are determined. Then, all the object files pertaining to the application (using an ordinary C linker) are lined into a single object file which becomes the "application object file". In other words, the following object files may be merged together:
Delay.o
uClibc/memmove.o
cookie/mbCookie.o
occur/mbOccur.o
uClibc/memcpy.o
thereby creating one single "application object file named" exampleVI.o. It is noted that in this example, the "application object file" may now be organized thusly:
All code sections (of type .text) with related relocation, symbol and debug information from Delay.o, memmove.o, mbCookie.o, mbOccur.o, and memcpy.o are assembled into one big code section (of type .text) with related relocation, symbol and debug information in the resulting exampleVI.o.
All data sections (of type .data) with related relocation, symbol and debug information from Delay.o, memmove.o, mbCookie.o, mbOccur.o, and memcpy.o are assembled together into one big data section (of type .data) with related relocation, symbol and debug information in the resulting exampleVI.o
All constructor sections (of type .ctors) with related relocation, symbol and debug information from Delay.o, memmove.o, mbCookie.o, mbOccur.o, and memcpy.o are assembled together into one big constructor section (of type .ctors) with related relocation, symbol and debug information in the resulting exampleVI.o.
All code destructor (of type .dtors) with related relocation, symbol and debug information from Delay.o, memmove.o, mbCookie.o, mbOccur.o, and memcpy.o are assembled together into one big destructor section (of type .dtors) with related relocation, symbol and debug information in the resulting exampleVI.o.
All read_only sections (of type .rodata) with related relocation, symbol and debug information from Delay.o, memmove.o, mbCookie.o, mbOccur.o, and memcpy.o are assembled together into one big read_only section (of type .rodata) with related relocation, symbol and debug information in the resulting exampleVI.o.
All un_initialized data sections (of type .bss) with related relocation, symbol and debug information from Delay.o, memmove.o, mbCookie.o, mbOccur.o, and memcpy.o are assembled together into one big un_initialized data section (of type .bss) with related relocation, symbol and debug information in the resulting exampleVI.o.
At this point, exampleVI.o contains:
Code section
Relocation info for Code section
Symbol info for Code section
Debug info for Code section
Data section
Relocation info for Data section
Symbol info for Data section
Debug info for Data section
Constructor section
Relocation info for Constructor section
Symbol info for Constructor section
Debug info for Constructor section
Destructor section
Relocation info for Destructor section
Symbol info for Destructor section
Debug info for Destructor section
Read_Only section
Relocation info for Read_Only section
Symbol info for Read_Only section
Debug info for Read_Only section
(in no specific order).

However, a typical object file has a very complicated internal structure and thus may not be suitable for sequential processing (on the target device 100). Therefore, in order to be able to load, dynamically link, and sequentially process an object file on the target device 100, the object file may be processed into a different format called the flatfile, described above in detail.

The flatfile is an object file that has a much simpler structure than a regular object file, and therefore it may be processed "on the fly" or sequentially on the target device 100. In one embodiment, a utility, referred to as obj2flat, that transforms an object file into a flatfile, may be developed and used. Therefore, by running the obj2flat utility on exampleVI.o a single flatfile file named exampleVI.flat may be generated.
In one embodiment, the exampleVI.flat file may include:
Section table
Relocation Table for Code Section
Code section
Relocation Table for Data Section
Data section
Relocation Table for Constructor Section
Constructor section
Relocation Table for Destructor Section
Destructor section
Relocation Table for Un-initialized Data Section
Un-initialized Data section
Relocation Table for Read_Only Section
Read_Only section
Note1: for flatfiles the order of information is very important.
Note2: in converting exampleVI.o to exampleVI.flat, debug information may be omitted, while the symbol information may be used to create the relocation tables.

The section table gives information for every section regarding the number of sections, the size of each section in bytes, and the type of each section, as described above. The section table may be required to pre-allocate the memory for the sections. The idea is that in the relocation process, all section addresses must be known, and so allocation of memory for sections is preferably the first step performed on the target device 100.

Once the flatfile has been generated, exampleVI.flat may be transferred to the target device. In one embodiment, the target device has a network buffer in RAM that is 4K wide (although in other embodiment, the network buffer may be set to any size desired). Based on the size of this buffer, transfers of information from exampleVI.flat to target device RAM may be made in chunks of 4K.

The very first 4K piece of exampleVI.flat arrives via the network into RAM on the target device 100. This 4K of data contains the Section Table, Relocation Table for the Code Section, and some Code Section. The dynamic linker (or loader) that resides in Flash memory of the target device 100 may be a state machine with two run modes: read information, and process information.

Once the very first 4K transfer arrives in target device RAM, the dynamic linker enters read mode and starts reading the Section Table. When the Section Table is completely read, the dynamic linker enters processing mode and stores the Section Table in another location in target RAM, then executes the Flash memory allocations for the sections described in the Section Table. After finishing the allocations, the dynamic linker enters read mode, and reads the Relocation Table for Code Section. When the Relocation Table for Code Section is completely read, the dynamic linker enters processing mode and stores the Relocation Table for Code Section into target RAM at a different location than the 4K network buffer and the Section Table locations. Then it uses the information from the Relocation Table for Code Section to process the content of the Code Section that is already in the target RAM. When the entire portion of the Code Section currently in RAM has been processed, a new 4K transfer from exampleVI.flat into the network buffer takes place, overwriting the previous 4K information. Note that at this time, the Section Table and Relocation Table for Code Section have been saved into other target RAM locations, so the dynamic linker can proceed with processing of the Code Section by using information from the Relocation Table for Code Section. After the Code Section is completely relocated, the Relocation Table for Code Section may not be not needed anymore.

Next, the Relocation Table for Data Section is read into the 4K network buffer. When the Relocation Table for Data Section Code is completely read, the dynamic linker enters processing mode and stores the Relocation Table for Data Section into target RAM, overwriting the Relocation Table for Code Section. Then the dynamic linker uses the information from the Relocation Table for Data Section to process the content of the Data Section that is already in target RAM. When the entire portion of Data Section in RAM has been processed, a new 4K transfer from exampleVI.flat into the network buffer takes place, thereby overwriting the previous 4K information. Note that at this time, the Relocation Table for Data Section has been saved into target RAM, so the dynamic linker can proceed with processing of the Data Section by using information from the Relocation Table for Data Section.

These 4K transfers and dynamic linker read/process cycles may continue until the entire exampleVI.flat file has been transferred to the target device 100 and the combined program 202A has been constructed (in the flash program space 1944). After the entire exampleVI.flat file is completely transferred to the target device, the Section Table will not be not needed anymore, and so may be deleted, and the constructed combined program 202A may be run.

Thus, in summary, in one embodiment of the invention, the program that is created on the computer system 102 may require use of program execution system 1305 to execute the program. For example, in one embodiment, the program is a graphical program and requires graphical program execution system 1305 to execute the program. Due to the small footprint of target device 100, in one embodiment, the program execution system is configured in such a way so as to only transmit the minimum amount of a program execution system (i.e., a portion of the modular callback system 1310) actually required by the program that is being executed. Thus, in one embodiment, the program execution system is partitioned into a (minimal) base execution system, and a plurality of components for presenting different functionality that can be performed by a program. The base portion of the program execution system is only capable of executing the very simplest commands. This minimal engine may comprise the smallest set of commands which allows the other components to be executed.

In one embodiment, when the program is developed by the user, a software program executing on the computer may operate to analyze the program to determine the functionality contained in the program. Once the functionality of the program has been identified, the program uses the functionality to determine which of the respective components of the program execution system are actually required by the program. In one embodiment, the method determines the functionality of the program, and uses the functionality to index into a data structure or look-up table to determine which program execution system components will be required to execute this program. When the program is then transmitted or deployed to target device 100, the computer system may operate to only provide the program execution system base portion and the respective components that are actually required to execute the program. Thus, the smaller amount of execution system code may be transmitted to the target device. This allows a smaller footprint for one or more of the target devices and/or the sensor devices. In other words, target device 100 may include a smaller processor and/or a smaller memory medium since a full program execution system is not required to be transmitted.

In one embodiment, after the software program analyzes the program to determine the functionality contained in the program, an execution system analysis program may determine which execution system components are required for execution of the program. A deployment program may then assemble the required components of the execution system and the program, for example, by interspersing the required execution system components and the program together according to the order of execution of the program. These interspersed program execution system components and program may then be assembled into a file (i.e., the flatfile 1707), and respective portions of the file transmitted to the target device 100 for execution.

In one embodiment, the flatfile 1707 may be received by the target device 100 and used to construct a combined program 202A including executable code from the program and executable code from the required execution system. This combined program 202A may then be executed by the embedded device 110. The combined program may also be stored in non-volatile memory of the embedded device for subsequent execution.

### Streaming Execution

In one embodiment, successive portions of the file may be streamed to the target device 100 and/or sensor device 120 for dynamic execution. In other words, the target device may execute the program as it is streamed to the device. For example, the sensor device 120 may receive a first portion of the file comprising a first portion of a program to be executed at a first portion of the execution system components that are used for executing this first portion of the program. After this first portion of the program has been executed along with the first portion of the execution system components, the first portion of the program may be flushed or removed from the memory of the sensor device. In a similar manner, the execution system components that are no longer required may be also removed from the memory. However, execution system components that may be required by other portions of the program to be executed may be retained in the memory for execution. As discussed above, in one embodiment, the deployment program determines which execution system components may be required for a plurality of different portions of the program, and includes a variable or data structure or other indication with the execution system component to indicate that this component should not be flushed immediately after it has been executed, or others should be retained by target device 100 for execution with another part of the program.

After the first portion of each of the program execution components and the program has been executed, computer system 102 and/or target device 100 may then provide a second portion of the program interspersed with the second portion of the execution system components. The second portion of the file may be provided by the computer system to target device 100. Operation then proceeds as above. Thus, for example, computer system 102 may operate to provide respective portions of the deployment file to target device 100 for execution on an as needed basis, based on the memory availability or memory capacity of target device 100. Target device 100 may receive the program that it is supposed to execute along with the execution system components used by that portion of the program, execute the program under direction of the execution system components, and then receive further portions of the deployment file, and so forth. Thus, computer system 102 may essentially provide a stream of the program and its corresponding execution system components to the target device according to the order of execution of the program.

In an example application of the present system, the computer system 102, the target device 100, and/or the hub device 108, may operate to execute a radio server program which is operable to discover remote or wireless data acquisition devices that enter into and exit from the wireless communication space that is within the range of the target device. Thus, periodically, the radio server executing on the target device may send out a wireless communication signal to query the presence of respective data acquisition devices 120 that are within the wireless communication range of the computer system 102, target device 100, or hub 108. Any present data acquisition devices may respond to the queries to indicate its respective presence. The queries may be performed periodically, e.g., once permitted, once per hour, once per day, or at greater or lesser time frame granularities. For further information regarding wireless execution of the graphical program, please see U.S. Patent Application Serial No. 10/283,602, titled "Wireless Deployment /Distributed Execution of Graphical Programs to Smart Sensors", and U.S. Patent Application Serial No. 10/283,758, titled Wireless Deployment / Distributed Execution of Graphical Programs to Smart Sensors", both of which were filed October 30, 2002.

In another embodiment of the present invention, the target device 100 may include a programmable hardware element, such as an FPGA, in addition to, or instead of, a processor. For example, in an embodiment where the target device includes both a processor/memory and an FPGA, the graphical program may be compiled to a hardware configuration file on the host computer system 102, where the hardware configuration file is targeted at the FPGA on the target device 100. The host computer may transmit the hardware configuration file to the target device 100, where it may be stored, e.g., in a memory medium of the target device. The processor on the target device may then deploy the hardware configuration file onto the FPGA, after which the configured FPGA may execute to perform the desired function or operation.

In another embodiment, the target device may include two (or more) FPGAs. The host may stream the compiled hardware configuration file to the target device in portions which are each suitable for deployment and execution by respective ones of the FPGAs. Execution of the program may proceed in "ping-pong" fashion among the two or more FPGAs. For example, once a first portion of the hardware configuration file is received and deployed on a first FPGA, the configured first FPGA may execute, thereby performing a function encoded in the first portion of the hardware configuration file. While the first FPGA is executing the first portion of the hardware configuration file, a second portion of the hardware configuration file may be received and stored in the memory medium of the target device. The processor may then deploy this second portion of the hardware configuration program to a second FPGA on the target device 100. Once the second portion is deployed, the second FPGA may begin execution. In one embodiment, once the second portion is deployed to the second FPGA and the second FPGA begins execution, execution of the first FPGA may be halted, and a third portion of the hardware configuration program may be received, stored in memory, and deployed onto the first FPGA (now inactive). Thus, the FPGAs may be dynamically configured in an alternating manner. Of course, this approach may be extended to more than two FPGAs, where more sophisticated techniques may be applied to determine which FPGA to configure with each successive portion of the hardware configuration program, e.g., round robin, longest inactive, size-based, etc.

Thus, various embodiments of the present invention may provide means for performing a measurement function by deploying or executing a graphical program to a measurement device using wireless means.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A computer-implemented method for performing a measurement function, the method comprising:
transmitting at least a portion of a graphical program (202) to a hub device (110) over a network (104);
the hub device (110) executing the at least a portion of the graphical program (202);
the hub device (110) sending one or more commands to a measurement device (120) via wireless means (205) in accordance with a wireless communication protocol in response to said executing;
the measurement device (120) performing the measurement function in response to said one or more commands, thereby generating resultant data; and
receiving the resultant data from the measurement device (120) via wireless means (205).

2. The method of claim 1,
wherein the graphical program (202) comprises a plurality of interconnected nodes that visually indicate functionality of the graphical program.

3. The method of claim 1,
wherein the graphical program (202) comprises a graphical data flow program.

4. The method of claim 1,
wherein said performing the measurement function includes the measurement device (120) measuring a physical phenomenon to acquire data.

5. The method of claim 1,
wherein the graphical program (202) comprises a block diagram portion and a user interface portion.

6. The method of claim 5,
wherein, during execution of the graphical program (202), the user interface is displayed on a display (180) of a first computer system and the block diagram executes on the hub device (110).

7. The method of claim 1, wherein said receiving the resultant data from the measurement device (120) via wireless means (205) comprises:
the measurement device (120) sending the resultant data to the hub device (110) via wireless means (205); and
receiving the resultant data from the hub device (110).

8. The method of claim 1,
wherein said transmitting at least a portion of a graphical program (202) to a hub device (110) over a network (104) comprises:
generating a machine-executable program based on the at least a portion of a graphical program (202); and
transmitting the machine-executable program to the hub device (110); and
wherein said hub device (110) executing the at least a portion of the graphical program (202) comprises:
the hub device (110) executing the machine-executable program.

9. The method of claim 1,
wherein said hub device (110) is an embedded device.

10. The method of claim 1,
wherein said hub device (110) executing the graphical program (202) comprises said hub device (110) sending the one or more commands to the measurement device (120); and
wherein the measurement device (120) comprises a wireless data acquisition (DAQ) device.

11. The method of claim 1,
wherein the measurement device (120) comprises a wireless data acquisition (DAQ) device;
wherein said transmitting the at least a portion of a graphical program (202) to the hub device (110) over a network (104)comprises:
accessing the hub device (110) over the network (104); and
downloading the graphical program (202) to the hub device (110) over the network (104);
wherein the hub device (110) executing the at least a portion of the graphical program (202) comprises the hub device (110) executing the graphical program (202), thereby sending the one or more commands to the wireless DAQ device via wireless means (205);
wherein the measurement device (120) performing the measurement function comprises the wireless DAQ device executing the one or more commands to generate data; and
wherein said receiving the resultant data from the measurement device (120) via wireless means (205) comprises:
the wireless DAQ device sending the data to the hub device (110); and receiving the data from the hub device (110).

12. The method of claim 1, further comprising:
storing a plurality of components of a program execution system (203) in a memory medium (407), wherein the graphical program (202) is executable by the program execution system (203);
programmatically analyzing the graphical program (202) to determine a subset of the plurality of components required for execution of the graphical program;
and
transmitting the subset of the plurality of components to the hub device (110);
wherein the hub device (110) executing the at least a portion of the graphical program comprises:
the hub device (110) executing the subset of the plurality of components of the program execution system (203) to execute the graphical program (202).

13. The method of claim 12,
wherein the graphical program (202) comprises a block diagram portion and a user interface portion;
wherein said transmitting the graphical program (202) to the hub device (110) comprises transmitting the block diagram portion of the graphical program (202) to the hub device (110); and
wherein, during execution of the program, the block diagram executes on the hub device (110) and the graphical user interface is displayed on a display (180) of a first computer system.

14. The method of claim 12, further comprising:
combining the subset of the plurality of components and the graphical program (202) into a file;
wherein said steps of transmitting comprises transmitting the file to the hub device (110).

15. The method of claim 14,
wherein said combining comprises interspersing the subset of the plurality of components with the graphical program (202) according to an execution order of the graphical program; and
wherein said transmitting the file to the hub device (110) comprises transmitting the interspersed subset of the plurality of components and the graphical program according to the execution order of the graphical program.

16. The method of claim 15,
wherein the hub device (110) includes a memory medium (407) having a first size;
wherein the file has a second larger size;
the method further comprising:
the hub device (110) receiving and storing a first portion of the file, wherein the first portion includes a first portion of the graphical program and a first portion of the subset of the plurality of components;
the hub device (110) executing the first portion of the graphical program and the first portion of the subset of the plurality of components;
the hub device (110) receiving and storing a second portion of the file, wherein the second portion includes a second portion of the graphical program and a second portion of the subset of the plurality of components; and
the hub device (110) executing the second portion of the graphical program and the second portion of the subset of the plurality of components.

17. The method of claim 16, wherein a first component of the first portion of the subset of the plurality of components is also required to execute the second portion of the graphical program (202), the method further comprising:
the hub device (110) storing the first component for said executing the second portion of the graphical program (202).

18. The method of claim 16,
wherein said transmitting the subset of the plurality of components to the hub device (110) comprises transmitting the subset of the plurality of components according to an execution order of the graphical program (202).

19. The method of claim 16, wherein a first component of the first portion of the subset of the plurality of components is not required to execute the second portion of the subset of the plurality of components, the method further comprising:
the hub device (110) flushing the first component of the first portion of the subset of the plurality of components.

20. The method of claim 19, the method further comprising:
the hub device (110) receiving and storing a third portion of the file, wherein the third portion includes a third portion of the graphical program and a third portion of the subset of the plurality of components; and
the hub device (110) executing the third portion of the graphical program (202) and the third portion of the subset of the plurality of components.

21. The method of claim 15, the method further comprising:
the hub device (110) generating a combined program from the file;
wherein said hub device (110) executing the subset of the plurality of components of the graphical program execution system (203) to execute the graphical program comprises:
the hub device (110) executing the combined program.

22. The method of claim 1,
wherein the graphical program is operable to perform one or more of:
an industrial automation function;
a process control function; and
a test and measurement function.

23. The method of claim 1, wherein the measurement function comprises one or more of:
an industrial automation function;
a process control function; and
a test and measurement function.

24. The method of claim 1, wherein the measurement function comprises:
a surveillance function.

25. A memory medium which stores program instructions implementing any of the methods of claims 1- 24.

26. A system operable to implement any of the methods of claims 1- 24.

## Patentansprüche

1. Ein auf einem Computer implementiertes Verfahren zum Ausführen einer Messfunktion, wobei das Verfahren umfasst:
Übertragen von mindestens einem Teil eines graphischen Programms (202) an ein Hub-Gerät (110) über ein Netzwerk (104);
wobei das Hub-Gerät (110) den mindestens einen Teil des graphischen Programms (202) ausführt,
das Hub-Gerät (102) als Antwort auf das Ausführen ein oder mehrere Befehle an ein Messgerät (120) über drahtlose Mittel (205) sendet in Einklang mit einem drahtlosen Kommunikationsprotokoll,
das Messgerät (120) die Messfunktion als Antwort auf den einen oder mehreren Befehle durchführt, wodurch resultierende Daten erzeugt werden, und
die resultierenden Daten von dem Messgerät (120) über drahtlose Mittel (205) empfangen werden.

2. Das Verfahren nach Anspruch 1,
wobei das graphische Programm (202) eine Mehrzahl von miteinander verbundenen Knoten umfasst, die die Funktionalität des graphischen Programms visuell anzeigen.

3. Das Verfahren nach Anspruch 1,
wobei das graphische Programm (202) ein graphisches Datenflussprogramm umfasst.

4. Das Verfahren nach Anspruch 1, wobei das Durchführen der Messfunktion umfasst, dass das Messgerät (120) ein physikalisches Phänomen misst, um Daten zu erhalten.

5. Das Verfahren nach Anspruch 1, wobei das graphische Programm (202) einen Blockdiagramm-Teil und einen Benutzerschnittstellen-Teil umfasst.

6. Das Verfahren nach Anspruch 5, wobei während der Ausführung des graphischen Programms (202) die Benutzerschnittstelle auf einem Bildschirm (180) eines ersten Computersystems angezeigt wird und das Blockdiagramm auf dem Hub-Gerät (110) ausgeführt wird.

7. Das Verfahren nach Anspruch 1, wobei das Empfangen der resultierenden Daten von dem Messgerät (120) über drahtlose Mittel (205) umfasst:
das Messgerät (120) sendet die resultierenden Daten zu dem Hub-Gerät (110) über drahtlose Mittel (205); und
die resultierenden Daten werden von dem Hub-Gerät (110) empfangen.

8. Das Verfahren nach Anspruch 1,
wobei das Übertragen von mindestens einem Teil eines graphischen Programms (202) zu einem Hub-Gerät (110) über ein Netzwerk (104) umfasst:
Erzeugen eines maschinenlesbaren Programms, das auf dem mindestens einen Teil eines graphischen Programms (202) basiert; und
Übertragen des maschinenlesbaren Programms an das Hub-Gerät (110); und
wobei das Ausführen des mindestens einen Teils des graphischen Programms (202) durch das Hub-Gerät (110) umfasst:
das Ausführen des maschinenlesbaren Programms durch das Hub-Gerät (110).

9. Das Verfahren nach Anspruch 1,
wobei das Hub-Gerät (110) ein embedded Gerät ist.

10. Das Verfahren nach Anspruch 1,
wobei das Ausführen des graphischen Programms (202) durch das Hub-Gerät (110) umfasst, dass das Hub-Gerät (110) einen oder mehrere Befehle an das Messgerät (120) sendet; und
wobei das Messgerät (120) ein drahtloses Datenaufnahme(DAQ)-Gerät umfasst.

11. Das Verfahren nach Anspruch 1,
wobei das Messgerät (120) ein drahtloses Datenaufnahme(DAQ)-Gerät umfasst;
wobei das Übertragen des mindestens einen Teils eines graphischen Programms (202) an das Hub-Gerät (110) über ein Netzwerk (104) umfasst:
Zugreifen auf das Hub-Gerät (110) über das Netzwerk (104); und
Herunterladen des graphischen Programms (202) zu dem Hub-Gerät (110) über das Netzwerk (104);
wobei das Durchführen des mindestens einen Teils des graphischen Programms (202) durch das Hub-Gerät (110) umfasst, dass das Hub-Gerät (110) das graphische Programm (202) ausführt, wodurch der eine oder die mehreren Befehle an das drahtlose DAQ-Gerät über drahtlose Mittel (205) gesendet werden;
wobei das Durchführen der Messfunktion durch das Messgerät (120) umfasst, dass das drahtlose DAQ-Gerät den einen oder die mehreren Befehle ausführt, um Daten zu erzeugen; und
wobei das Empfangen der resultierenden Daten von dem Messgerät (120) über drahtlose Mittel (205) umfasst:
das Senden der Daten durch das drahtlose DAQ-Gerät an das Hub-Gerät (110); und
das Empfangen der Daten von dem Hub-Gerät (110).

12. Das Verfahren nach Anspruch 1, weiterhin umfassend:
Speichern einer Mehrzahl von Komponenten eines Programmausführungssystems (203) in einem Speichermedium (407),
wobei das graphische Programm (202) durch das Programmausführungssystem (203) ausführbar ist;
programmtechnisches Analysieren des graphischen Programms (202), um eine Teilmenge der Mehrzahl von Komponenten zu bestimmen, die für die Ausführung des graphischen Programms benötigt wird; und
Übertragen der Teilmenge der Mehrzahl von Komponenten an das Hub-Gerät (110);
wobei das Ausführen des mindestens einen Teils des graphischen Programms durch das Hub-Gerät (110) umfasst:
das Ausführen der Teilmenge der Mehrzahl von Komponenten des Programmausführungssystems (203) durch das Hub-Gerät (110), um das graphische Programm (202) auszuführen.

13. Das Verfahren nach Anspruch 12,
wobei das graphische Programm (202) einen Blockdiagramm-Teil und einen Benutzerschnittstelle-Teil umfasst;
wobei das Übertragen des graphischen Programms (202) an das Hub-Gerät (110) das Übertragen des Blockdiagramm-Teils des graphischen Programms (202) an das Hub-Gerät (110) umfasst; und
wobei während der Ausführung des Programms das Blockdiagramm auf dem Hub-Gerät (110) ausgeführt wird und die graphische Benutzerschnittstelle auf einem Bildschirm (180) eines ersten Computersystems angezeigt wird.

14. Das Verfahren nach Anspruch 12, weiter umfassend:
Kombinieren der Teilmenge der Mehrzahl von Komponenten und des graphischen Programms (202) in einer Datei;
wobei die Übertragungsschritte das Übertragen der Datei an das Hub-Gerät (110) umfassen.

15. Das Verfahren nach Anspruch 14,
wobei das Kombinieren das Einflechten der Teilmenge der Mehrzahl von Komponenten in das graphische Programm (202) umfasst gemäß einer Ausführungsreihenfolge des graphischen Programms; und
wobei das Übertragen der Datei an das Hub-Gerät (110) das Übertragen der eingeflochtenen Teilmenge der Mehrzahl von Komponenten und des graphischen Programms gemäß der Ausführungsreihenfolge des graphischen Programms umfasst.

16. Das Verfahren nach Anspruch 15,
wobei das Hub-Gerät (110) ein Speichermedium (407) umfasst, das eine erste Größe hat;
wobei die Datei eine zweite umfangreichere Größe hat;
wobei das Verfahren weiter umfasst:
das Hub-Gerät (110) empfängt und speichert einen ersten Teil der Datei, wobei der erste Teil einen ersten Teil des graphischen Programms und einen ersten Teil der Teilmenge der Mehrzahl von Komponenten umfasst;
das Hub-Gerät (110) führt den ersten Teil des graphischen Programms und den ersten Teil der Teilmenge der Mehrzahl von Komponenten aus;
das Hub-Gerät (110) empfängt und speichert einen zweiten Teil der Datei, wobei der zweite Teil einen zweiten Teil des graphischen Programms und einen zweiten Teil der Teilmenge der Mehrzahl von Komponenten umfasst; und
das Hub-Gerät (110) führt den zweiten Teil des graphischen Programms und den zweiten Teil der Teilmenge der Mehrzahl von Komponenten aus.

17. Das Verfahren nach Anspruch 16, wobei eine erste Komponente des ersten Teils der Teilmenge der Mehrzahl von Komponenten auch benötigt wird, um den zweiten Teil des graphischen Programms (202) auszuführen, wobei das Verfahren weiter umfasst:
das Hub-Gerät (110) speichert die erste Komponente für das Durchführen des zweiten Teils des graphischen Programms (202).

18. Das Verfahren nach Anspruch 16,
wobei das Übertragen der Teilmenge der Mehrzahl von Komponenten an das Hub-Gerät (110) das Übertragen der Teilmenge der Mehrzahl von Komponenten gemäß einer Ausführungsreihenfolge des graphischen Programms (202) umfasst.

19. Das Verfahren nach Anspruch 16, wobei eine erste Komponente des ersten Teils der Teilmenge der Mehrzahl von Komponenten nicht benötigt wird, um den zweiten Teil der Teilmenge der Mehrzahl von Komponenten auszuführen, wobei das Verfahren weiterhin umfasst:
das Hub-Gerät (110) löscht die erste Komponente des ersten Teils der Teilmenge der Mehrzahl von Komponenten.

20. Das Verfahren nach Anspruch 19, wobei das Verfahren weiterhin umfasst:
das Hub-Gerät (110) empfängt und speichert einen dritten Teil der Datei, wobei der dritte Teil einen dritten Teil des graphischen Programms und einen dritten Teil der Teilmenge der Mehrzahl von Komponenten umfasst; und
das Hub-Gerät (110) führt den dritten Teil des graphischen Programms (202) und den dritten Teil der Teilmenge der Mehrzahl von Komponenten aus.

21. Das Verfahren nach Anspruch 15, wobei das Verfahren weiter umfasst:
das Hub-Gerät (110) erzeugt ein kombiniertes Programm aus der Datei;
wobei das Ausführen der Teilmenge der Mehrzahl von Komponenten des graphischen Programmausführungssystems (203) durch das Hub-Gerät (110), um das graphische Programm auszuführen, umfasst:
das Ausführen des kombinierten Programms durch das Hub-Gerät (110).

22. Das Verfahren nach Anspruch 1,
wobei das graphische Programm ausführbar ist, um eines oder mehrere von:
einer industriellen Automatisierungsfunktion;
einer Prozesssteuerungsfunktion; und
einer Test- und Messfunktion.
durchzuführen.

23. Das Verfahren nach Anspruch 1, wobei die Messfunktion ein oder mehrere umfasst von:
einer industriellen Automatisierungsfunktion;
einer Prozessteuerungsfunktion; und
einer Test- und Messfunktion.

24. Das Verfahren nach Anspruch 1, wobei die Messfunktion eine Überwachungsfunktion umfasst.

25. Ein Speichermedium, das Programmbefehle speichert, die irgendeines der Verfahren nach den Ansprüchen 1-24 implementieren.

26. Ein System, das betriebsfähig ist um irgendeines der Verfahren nach den Ansprüchen 1-24 zu implementieren.

## Revendications

1. Un procédé mis en oeuvre par ordinateur pour exécuter une fonction de mesure, le procédé comprenant :
l'émission d'au moins une partie d'un programme graphique (202) vers un dispositif concentrateur (110) par l'intermédiaire d'un réseau (104) ;
l'exécution par le dispositif concentrateur (110) de la au moins une partie du programme graphique (202) ;
l'envoi par le dispositif concentrateur (110) d'une ou plusieurs commandes à un dispositif de mesure (120) via des moyens sans fil (205) conformément à un protocole de communication sans fil en réponse à ladite exécution ;
le dispositif de mesure (120) exécutant la fonction de mesure en réponse à ladite une ou plusieurs commandes, produisant ainsi des données résultantes ; et
la réception des données résultantes depuis le dispositif de mesure (120) via des moyens sans fil (205).

2. Le procédé de la revendication 1,
dans lequel le programme graphique (202) comprend une pluralité de noeuds interconnectés qui indiquent visuellement la fonctionnalité du programme graphique.

3. Le procédé de la revendication 1,
dans lequel le programme graphique (202) comprend un programme de flux de données graphiques.

4. Le procédé de la revendication 1,
dans lequel ladite exécution de la fonction de mesure comprend la mesure par le dispositif de mesure d'un phénomène physique pour l'acquisition de données.

5. Le procédé de la revendication 1,
dans lequel le programme graphique comprend une partie de diagramme par blocs et une partie d'interface utilisateur.

6. Le procédé de la revendication 5,
dans lequel, lors de l'exécution du programme graphique, l'interface utilisateur est affichée sur un afficheur (180) d'un premier système informatique et le diagramme par blocs s'exécute sur le dispositif concentrateur (110).

7. Le procédé de la revendication 1, dans lequel ladite réception des données résultantes depuis le dispositif de mesure (120) via des moyens sans fil (205) comprend :
l'envoi par le dispositif de mesure (120) des données résultantes vers le dispositif concentrateur (110) via des moyens sans fil (205) ; et
la réception des données résultantes depuis le dispositif concentrateur (110).

8. Le procédé de la revendication 1,
dans lequel ladite émission d'au moins une partie d'un programme graphique (202) vers un dispositif concentrateur (110) par l'intermédiaire d'un réseau (104) comprend :
la génération d'un programme exécutable par machine en fonction d'au moins une partie d'un programme graphique (202) ; et
l'émission du programme exécutable par machine vers le dispositif concentrateur (110) ; et
dans lequel ladite exécution par le dispositif concentrateur (110) de la au moins une partie du programme graphique (202) comprend :
l'exécution par le dispositif concentrateur (110) du programme exécutable par machine.

9. Le procédé de la revendication 1,
dans lequel ledit dispositif concentrateur est un dispositif intégré.

10. Le procédé de la revendication 1,
dans lequel l'exécution par ledit dispositif concentrateur (110) du programme graphique (202) comprend l'envoi par ledit dispositif concentrateur (110) des une ou plusieurs commandes vers le dispositif de mesure (120) ; et dans lequel le dispositif de mesure (120) comprend un dispositif d'acquisition de données (DAQ) sans fil.

11. Le procédé de la revendication 1,
dans lequel le dispositif de mesure comprend un dispositif d'acquisition de données (DAQ) sans fil ;
dans lequel ladite émission de la au moins une partie d'un programme graphique (202) vers le dispositif concentrateur (110) par l'intermédiaire d'un réseau (104) comprend :
l'accès au dispositif concentrateur (110) par l'intermédiaire du réseau (104) ; et
le téléchargement du programme graphique (202) vers le dispositif concentrateur (110) par l'intermédiaire du réseau (104) ;
dans lequel l'exécution par le dispositif concentrateur (110) de la au moins une partie du programme graphique (202) comprend l'exécution par le dispositif concentrateur (110) du programme graphique (202), de manière à envoyer la une ou plusieurs commandes vers le dispositif DAQ sans fil via des moyens sans fil (205) ;
dans lequel l'exécution par le dispositif de mesure (120) de la fonction de mesure comprend l'exécution par le dispositif DAQ sans fil de la une ou plusieurs commandes pour générer des données ; et
dans lequel ladite réception des données résultantes depuis le dispositif de mesure (120) via des moyens sans fil (205) comprend :
l'envoi par le dispositif DAQ sans fil des données vers le dispositif concentrateur (110) ; et
la réception des données depuis le dispositif concentrateur (110).

12. Le procédé de la revendication 1, comprenant en outre :
la mémorisation d'une pluralité de composants d'un système d'exécution de programme (203) dans un support de mémoire (407), où un programme graphique (202) est exécutable par le système d'exécution de programme (203) ;
l'analyse programmatique du programme graphique (202) pour déterminer un sous-ensemble de la pluralité de composants requis pour l'exécution du programme graphique ; et
l'émission du sous-ensemble de la pluralité de composants vers le dispositif concentrateur (110) ;
dans lequel l'exécution par le dispositif concentrateur (110) de la au moins une partie du programme graphique comprend :
l'exécution par le dispositif concentrateur (110) du sous-ensemble de la pluralité de composants du système d'exécution de programme (203) pour exécuter le programme graphique (202).

13. Le procédé de la revendication 12,
dans lequel le programme graphique (202) comprend une partie de diagramme par blocs et une partie d'interface utilisateur ;
dans lequel ladite émission du programme graphique (202) vers le dispositif concentrateur (110) comprend l'émission de la partie de diagramme par blocs du programme graphique (202) vers le dispositif concentrateur (110) ; et
dans lequel, durant l'exécution du programme, le diagramme par blocs s'exécute sur le dispositif concentrateur (110) et l'interface utilisateur graphique est affichée sur un afficheur (180) d'un premier système informatique.

14. Le procédé de la revendication 12, comprenant en outre :
la combinaison du sous-ensemble de la pluralité de composants et du programme graphique (202) dans un fichier ;
dans lequel lesdites étapes d'émission comprennent l'émission du fichier vers le dispositif concentrateur (110).

15. Le procédé de la revendication 14,
dans lequel ladite combinaison comprend l'imbrication du sous-ensemble de la pluralité de composants avec le programme graphique (202) en fonction d'un ordre d'exécution du programme graphique ; et
dans lequel ladite émission du fichier vers le dispositif concentrateur (110) comprend l'émission du sous-ensemble imbriqué de la pluralité de composants et du programme graphique en fonction de l'ordre d'exécution du programme graphique.

16. Le procédé de la revendication 15, dans lequel le dispositif concentrateur (110) comprend un support mémoire (407) présentant une première dimension ;
dans lequel le fichier a une seconde dimension supérieure ;
le procédé comprenant en outre :
la réception et le stockage d'une première partie du fichier par le dispositif concentrateur (110), où la première partie comprend une première partie du programme graphique et une première partie du sous-ensemble de la pluralité de composants ;
l'exécution par le dispositif concentrateur (110) de la première partie du programme graphique et de la première partie du sous-ensemble de la pluralité de composants ;
la réception et le stockage d'une seconde partie du fichier par le dispositif concentrateur (110), où la seconde partie comprend une seconde partie du programme graphique et une seconde partie du sous-ensemble de la pluralité de composants ; et
l'exécution par le dispositif concentrateur (110) de la seconde partie du programme graphique et de la seconde partie du sous-ensemble de la pluralité de composants.

17. Le procédé de la revendication 16, dans lequel un premier composant de la première partie du sous-ensemble de la pluralité de composants est également requis pour l'exécution de la seconde partie du programme graphique (202), le procédé comprenant en outre :
la mémorisation par le dispositif concentrateur (110) du premier composant pour ladite exécution de la seconde partie du programme graphique (202).

18. Le procédé de la revendication 16,
dans lequel ladite émission du sous-ensemble de la pluralité de composants vers le dispositif concentrateur (110) comprend l'émission du sous-ensemble de la pluralité de composants en fonction d'un ordre d'exécution du programme graphique (202).

19. Le procédé de la revendication 16, dans lequel un premier composant de la première partie du sous-ensemble de la pluralité de composants n'est pas requis pour l'exécution de la seconde partie du sous-ensemble de la pluralité de composants, le procédé comprenant en outre :
l'évacuation par le dispositif concentrateur (110) du premier composant de la première partie du sous-ensemble de la pluralité de composants.

20. Le procédé de la revendication 19, dans lequel le procédé comprend en outre :
la réception et la mémorisation d'une troisième partie du fichier par le dispositif concentrateur (110), où la troisième partie comprend une troisième partie du programme graphique et une troisième partie du sous-ensemble de la pluralité de composants ; et
l'exécution par le dispositif concentrateur (110) de la troisième partie du programme graphique (202) et de la troisième partie du sous-ensemble de la pluralité de composants.

21. Le procédé de la revendication 15, dans lequel le procédé comprend en outre :
la génération par le dispositif concentrateur (110) d'un programme combiné provenant du fichier ;
dans lequel l'exécution par ledit dispositif concentrateur (110) du sous-ensemble de la pluralité de composants du système d'exécution de programme graphique (203) pour l'exécution du programme graphique comprend :
l'exécution par le dispositif concentrateur du programme combiné.

22. Le procédé de la revendication 1,
dans lequel le programme graphique peut être mis en oeuvre pour exécuter une ou plusieurs d'entre :
une fonction d'automatique industrielle ;
une fonction de contrôle de processus ; et
une fonction de test et de mesure.

23. Le procédé de la revendication 1, dans lequel la fonction de mesure comprend une ou plusieurs d'entre :
une fonction d'automatique industrielle ;
une fonction de contrôle de processus ; et
une fonction de test et de mesure.

24. Le procédé de la revendication, dans lequel la fonction de mesure comprend :
une fonction de surveillance.

25. Un support mémoire qui mémorise des instructions de programme implémentant l'un des procédés des revendications 1 à 24.

26. Un système pouvant être mis en oeuvre pour implémenter l'un des procédés des revendications 1 à 24.
